(19) Europäisches Patentamt
European Patent Office
Office européen des brevets

(11) **EP 2 156 590 B1**

(12) **FASCICULE DE BREVET EUROPEEN**

(45) Date de publication et mention
de la délivrance du brevet:
**21.06.2017 Bulletin 2017/25**

(51) Int Cl.:
*H04J 11/00* *(2006.01)*    *H04L 5/02* *(2006.01)*
*H04L 5/00* *(2006.01)*

(21) Numéro de dépôt: **08788206.4**

(22) Date de dépôt: **18.04.2008**

(86) Numéro de dépôt international:
**PCT/FR2008/050705**

(87) Numéro de publication internationale:
**WO 2008/145917 (04.12.2008 Gazette 2008/49)**

(54) **ÉMISSION ET RÉCEPTION DE SIGNAUX À PORTEUSES MULTIPLES ET SPECTRE ÉTALÉ**

SENDEN UND EMPFANGEN VON MEHRTRÄGER-SPREIZSPEKTRUMSIGNALEN

TRANSMISSION AND RECEPTION OF MULTICARRIER SPREAD-SPECTRUM SIGNALS

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **11.05.2007 FR 0703421**

(43) Date de publication de la demande:
**24.02.2010 Bulletin 2010/08**

(73) Titulaire: **Orange**
**75015 Paris (FR)**

(72) Inventeurs:
• **LELE, Chrislin**
**63173 AUBIERE Cedex (FR)**
• **SIOHAN, Pierre**
**F-35200 Rennes (FR)**
• **LEGOUABLE, Rodophe**
**F-35510 Cesson Sevigne (FR)**
• **BELLANGER, Maurice**
**F-75006 Paris (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**EP-A- 0 903 871**    **EP-A- 1 511 206**
**WO-A-2006/130742**

• **KLEIN ET AL.: "FRAMES multiple access mode
1-wideband TDMA with and without spreading"
IEEE INTERNATIONAL SYMPOSIUM ON
PERSONAL, INDOOR AND MOBILE RADIO
COMMUNICATIONS, vol. 1, 1 septembre 1997
(1997-09-01), pages 37-41, XP010247502 New
York, US**
• **CHEN, CAI: "Optimization of transmitter and
receiver filters for OQAM-OFDM systems using
nonlinear programming" IEICE TRANSACTIONS
ON COMMUNICATIONS, no. 11, novembre 1997
(1997-11), pages 1680-1687, XP000733753 Tokyo,
JP**

**Description**

**1. Domaine de l'invention**

Le domaine de l'invention est celui de la transmission et de la diffusion d'informations numériques, notamment à haut débit, sur une bande de fréquence limitée.

Plus précisément, l'invention concerne une technique d'émission et de réception d'un signal à porteuses multiples et à étalement de spectre utilisant des symboles de données à valeur complexe, dans un contexte mobile ou fixe.

Notamment, la technique selon l'invention est bien adaptée à la transmission de signaux à porteuses multiples ayant subi une modulation de type OFDM/OQAM (en anglais « Orthogonal Frequency Division Multiplexing / Offset Quadrature Amplitude Modulation ») ou BFDM/OQAM (en anglais « Biorthogonal Frequency Division Multiplexing / OQAM »), pour lesquelles les porteuses sont mises en forme par une fonction prototype.

**2. Art antérieur**

**2.1 Les modulations multiporteuses**

*2.1.1 Les modulations OFDM*

On connaît à ce jour les modulations à porteuses multiples de type OFDM (en anglais « Orthogonal Frequency Division Multiplex »). Une telle technique de modulation apporte une solution efficace au problème de la diffusion d'informations, en particulier pour des canaux multi-trajets, radio ou filaires.

De ce fait, la technique de modulation multiporteuse OFDM a été retenue dans plusieurs normes et spécifications pour des applications en transmission filaires, par exemple de type ADSL (en anglais « Asymmetric Digital Subscriber Line ») ou PLC (en anglais « Powerline Communication », en français « courant porteur en ligne » ou CPL), ou sans fil, par exemple de type DAB (en anglais « Digital Audio Broadcasting »), DVB-T (en anglais « Digital Video Broadcasting-Terrestrial »), ou WLAN (en anglais « Wireless Local Area Network »).

Toutefois, la mise en forme rectangulaire d'un signal réalisée par un modulateur OFDM présente l'inconvénient d'une mauvaise localisation fréquentielle.

Par conséquent, des solutions alternatives ont été proposées, aboutissant à des systèmes de modulation à porteuses multiples dans lesquelles le signal est mis en forme par des fonctions dites prototypes, permettant d'obtenir une meilleure localisation fréquentielle.

On rappelle que l'ensemble des sous-porteuses d'une modulation multiporteuse forme un multiplex, et chacune des sous-porteuses de ce multiplex peut être mise en forme à l'aide d'une même fonction prototype, notée $g(t)$, qui caractérise la modulation multiporteuse.

*2.1.2 Les modulations OFDM/OQAM*

Ainsi, une solution proposée consiste à remplacer une modulation en quadrature QAM (« Quadrature Amplitude Modulation »), mise en oeuvre sur chacune des sous-porteuses, par une modulation décalant d'un demi temps symbole les parties réelles et imaginaires des données complexes à transmettre, pour deux fréquences porteuses successives.

Cette alternance conduit à une modulation multiporteuse de type OFDM/OQAM. Cette approche permet notamment de réaliser les conditions d'orthogonalité désirées avec des filtres prototypes qui ne sont pas nécessairement de forme rectangulaire. En effet, le décalage (offset temporel) introduit par la modulation OQAM permet de relâcher les contraintes d'orthogonalité, ou plus généralement de biorthogonalité. Cette famille de modulation offre ainsi un choix de fonctions prototypes plus large que la simple fonction prototype rectangulaire d'une modulation OFDM.

Ainsi, suivant le type de canal de transmission considéré pour une application donnée, comme par exemple le canal radiomobile ou le canal à courant porteur en ligne (CPL), on peut effectuer un choix de fonctions prototypes appropriées aux types de spécifications et/ou distorsions rencontrées. En particulier, il est préférable de retenir des fonctions prototypes présentant une meilleure sélectivité fréquentielle que le sinus cardinal utilisé en modulation OFDM, notamment en canal radiomobile pour lutter contre la dispersion fréquentielle due à l'effet Doppler, ou en canal CPL pour mieux résister aux brouilleurs à bande étroite, et de manière générale pour satisfaire plus aisément les spécifications fréquentielles des masques d'émission.

Plus précisément, le signal OQAM peut se représenter en bande de base sous la forme suivante :

$$s(t) = \sum_n \sum_{m=0}^{M-1} a_{m,n} \underbrace{g\left(t - n\tau_0\right)e^{j2\pi m v_0 t}e^{j\phi_{m,n}}}_{g_{m,n}(t)} \qquad (1),$$

avec :

- $a_{m,n}$ les symboles de données à valeur réelle à transmettre sur une sous-porteuse $m$ à l'instant $n$ ;
- $M$ le nombre de fréquences porteuses (nécessairement pair) ;
- $g$ la fonction prototype utilisée par le modulateur ;
- $\tau_0$ la durée d'un symbole multiporteuse ;
- $v_0$ l'espacement entre deux sous-porteuses adjacentes du multiplex ;
- $\phi_{m,n}$ un terme de phase choisi de manière à réaliser une alternance partie réelle-partie imaginaire permettant l'orthogonalité, ou plus généralement la biorthogonalité.

La modulation OFDM/OQAM est donc une alternative à la modulation OFDM classique, reposant sur un choix judicieux de la fonction prototype modulant chacune des sous-porteuses du signal, qui doit être bien localisée dans l'espace temps/fréquence.

On rappelle que les modulations de type OFDM transmettent classiquement des symboles de données à valeur complexe, tandis que les modulations de type OFDM/OQAM transmettent des symboles de données à valeur réelle, un symbole de données à valeur complexe OFDM/QAM ou à valeur réelle OFDM/OQAM étant constitué d'un ensemble d'éléments de données à un instant t donné.

L'efficacité spectrale de l'OFDM/OQAM est donc identique à celle de l'OFDM classique sans intervalle de garde. En effet, on transmet pour un même espacement inter-porteuses $v_0$ :

- en OFDM/OQAM, une valeur réelle par sous-porteuse tous les intervalles de temps $\tau_0$ ;
- en OFDM classique sans intervalle de garde, une valeur complexe (i.e. deux valeurs réelles) tous les $2 \times \tau_0$.

Si on considère une modulation de type OFDM avec un intervalle de garde, où un symbole de durée $2\tau_0$ est prolongé par un intervalle de garde de durée $\Delta$, l'efficacité spectrale de l'OFDM/OQAM est $(\Delta+2\tau_0)/2\tau_0$ fois supérieure à celle de l'OFDM.

On rappelle également que les techniques de modulation de type OFDM/OQAM ne nécessitent pas l'introduction d'un intervalle de garde ou d'un préfixe cyclique, tout en présentant la même efficacité spectrale qu'une modulation OFDM classique.

### 2.1.3 Les modulations BFDM/OQAM

De plus, si l'on choisit d'avoir côté réception des fonctions de démodulation qui ne sont pas nécessairement les fonctions conjuguées des fonctions prototypes utilisées en émission, on peut, en utilisant la propriété de biorthogonalité, généraliser l'OFDM/OQAM à la technique de modulation BFDM/OQAM. En effet, le principe d'offset, lié à la famille OQAM, est strictement identique dans le cadre d'une modulation de type BFDM/OQAM.

Plus précisément, l'intérêt de la modulation de type BFDM/OQAM est de permettre, pour une longueur donnée de filtre prototype, une réduction du retard apporté par le système de transmission.

Comme indiqué précédemment, la technique de modulation BFDM/OQAM, tout comme l'OFDM/OQAM, transmet des symboles de données à valeur réelle à une cadence double de celle à laquelle l'OFDM transmet des symboles de données à valeur complexe. Par conséquent, ces deux modulations ont a priori la même efficacité spectrale.

En effet, dans le cas biorthogonal, la base de démodulation à la réception peut être différente de celle de l'émission, et peut s'exprimer sous la forme suivante :

$$f_{m,n}(t) = f\left(t - n\tau_0\right)e^{j2\pi m v_0 t}e^{j\phi_{m,n}} \qquad (2)$$

La condition de biorthogonalité s'exprime alors sous la forme suivante :

$$\langle g_{m,n}, f_{m',n'} \rangle_R = \Re \left\{ \int_{-\infty}^{\infty} g_{m,n}(t) f_{m',n'}^*(t) dt \right\} = \delta_{m,m'} \delta_{n,n'} \qquad (3)$$

où : $\langle .,. \rangle_R$ désigne le produit scalaire réel, et $\Re\{.\}$ désigne le partie réelle.

Dans la suite, on utilise le sigle OQAM pour désigner à la fois les techniques de type OFDM/OQAM et de type BFDM/OQAM.

*2.1.4 Les modulations MC-CDMA*

Dans les applications où les ressources spectrales doivent être partagées entre plusieurs utilisateurs, encore appelés usagers, au sein d'une bande de transmission, la modulation OFDM dite classique (avec intervalle de garde et réalisée par simple transformée de Fourier rapide), peut être associée à une techniques d'accès multiple de type CDMA (en anglais « Coded Division Multiple Access »).

Cette technique, encore appelée MC-CDMA, a largement été étudiée dans le contexte radiomobile, et est également envisagée dans le cas des PLC. Cette technique est décrite par exemple dans la demande de brevet EP 1 511 206 A1. Plus précisément, elle permet à un ensemble d'usagers de transmettre simultanément dans une même bande de fréquence.

L'accès multiple CDMA est envisagé dans différents systèmes de part sa flexibilité au niveau de l'accès et de ses performances obtenues dans les réseaux cellulaires utilisant un facteur de réutilisation de fréquence unitaire. Une telle technique confère une flexibilité aux nouveaux systèmes de communication mobile et cellulaire, qui doivent être capables d'assurer à la fois un transfert rapide des données pour un nombre réduit d'utilisateurs, et aussi un transfert moins rapide mais robuste des données pour un très grand nombre d'utilisateurs, en lien montant et en lien descendant.

La technique MC-CDMA est principalement étudiée sur le lien descendant de communication (liaison synchrone), et permet à différents utilisateurs d'occuper le même espace temps-fréquence en distinguant chaque utilisateur par un code d'étalement qui lui est propre.

Les codes associés à chaque utilisateur, encore appelés codes d'étalement, sont orthogonaux, et sont par exemple issus d'une matrice de type Walsh-Hadamard.

Pour la liaison descendante, chaque terminal mobile du système de communication ne traite qu'un seul canal de transmission, restaurant l'orthogonalité des codes en réception par une simple égalisation du signal de type « Zéro Forcing » (ZF) ou « Minimum Mean Squared Error » (MMSE).

Par contre, sur liaison remontante, la propagation des flux de données issus de divers usagers via des canaux de propagation différents provoque une forte perte d'orthogonalité des codes d'étalement, qui ne peut être totalement restaurée, engendrant ainsi une interférence d'accès multiple (MAI) élevée. Ce terme de MAI conduit alors à de médiocres performances de transmission si une égalisation identique de celle de la liaison descendante est réalisée. Sur liaison remontante, la technique MC-CDMA nécessite donc la mise en oeuvre de détecteurs plus complexes.

Le MC-CDMA réalise un étalement du flux des données sur différentes sous-porteuses. La séquence d'étalement est ainsi appliquée dans le domaine fréquentiel, ce qui permet de tirer profit de la diversité fréquentielle du canal.

De plus, l'avantage d'appliquer un étalement dans le domaine fréquentiel réside dans le fait qu'il est possible de récupérer en réception toute l'énergie dissipée du signal et de l'utiliser pour restituer au mieux le signal émis.

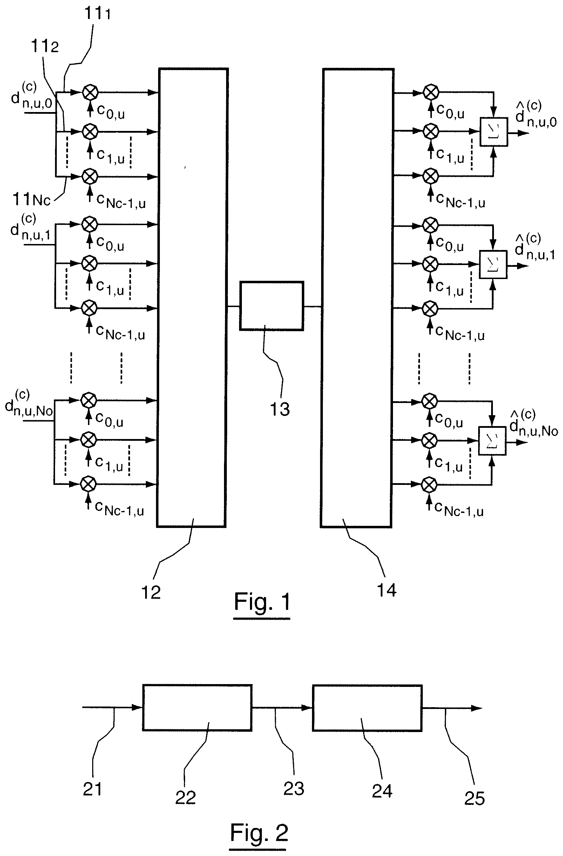

Plus précisément, on présente en relation avec la figure 1 la structure générale d'un système de transmission MC-CDMA pour un utilisateur *j*.

Après une conversion série/parallèle (non représentée sur la figure), chaque symbole de données à valeur complexe $d_{n,u,0}^{(c)}$, $d_{n,u,1}^{(c)}$, ..., $d_{n,u,N_0-1}^{(c)}$ subit $N_c$ répliques, où $d_{n,j,m}^{(c)}$ représente le $m^{\text{ième}}$ symbole de données à valeur complexe du $j^{\text{ième}}$ utilisateur à l'instant *n*, et $N_c$ la longueur des codes d'étalement. Ainsi le même symbole de données est transmis sur $N_c$ sous-porteuses différentes.

Considérant par exemple le symbole de données $d_{n,u,0}^{(c)}$, à chaque réplique $11_1$, $11_2$, ..., $11_{Nc}$ du symbole de données est appliqué un « chip » d'étalement (encore appelé « bribe » en français), propre à chaque utilisateur.

Par exemple le chip $c_{0,u}$ du code d'étalement associé à l'utilisateur *u* est appliqué à la première réplique $11_1$ du symbole de données $d_{n,u,0}^{(c)}$, le chip $c_{1,u}$ est appliqué à la deuxième réplique $11_2$ du symbole de données $d_{n,u,0}^{(c)}$,

et le chip $c_{N_c-1,u}$ est appliqué à la dernière réplique $11_{Nc}$ du symbole de données $d_{n,u,0}^{(c)}$.

On peut notamment remarquer que dans le cas où le nombre de sous-porteuses modulées $N_{pm}$ est égal à la taille du code $N_c$, la conversion série/parallèle n'est pas effectuée.

Les symboles issus de l'opération d'étalement subissent alors une modulation à porteuses multiples de type OFDM classique 12 (transformation de Fourier inverse suivie d'une insertion d'un intervalle de garde).

On considère alors que chaque sous-porteuse du signal MC-CDMA transporte une partie du symbole correspondant à un chip du code d'étalement, ce qui introduit de la diversité fréquentielle.

La technique MC-CDMA possède donc deux domaines d'orthogonalité : celui des fréquences pour les données d'un même utilisateur et celui des codes d'étalement entre utilisateurs.

Un des principaux intérêts de cette technique réside dans la flexibilité de l'attribution de la ressource spectrale et donc du débit d'information transmis. En effet, si un utilisateur a besoin de transmettre un débit d'information supérieur à un débit de base (on rappelle qu'à un code d'étalement correspond un débit donné), le réseau lui attribuera autant que possible de séquences de code d'étalement différentes, au détriment bien entendu d'une réduction du nombre d'utilisateurs simultanés.

Dans le cas où les $U$ utilisateurs utilisent chacun un code unique pour transmettre leurs données, l'expression du signal émis est :

$$s(t) = \sum_n \sum_{m=0}^{N_0-1} \sum_{p=0}^{N_c-1} \sum_{j=0}^{U-1} d_{n,j,m}^{(c)} c_{p,j} e^{2i\pi F_{mN_c+p}t} g(t-nT_s) \qquad (4)$$

avec :

- $F_{mN_c+p} = F_0 + \dfrac{mN_c+p}{2\tau_0}$ ;

- $T_s = 2\tau_0 + \Delta$ ;

- $N_0$ le nombre de données transmises dans un symbole multiporteuse par utilisateur, tel que $N_0 = \dfrac{\text{nombre de porteuses modulées}}{N_c}$ ;

- $U$ le nombre d'utilisateurs simultanés ;

- $c_{p,j} = \pm \dfrac{1}{\sqrt{N_c}}$ le $p^{ième}$ chip normalisé en puissance du code d'étalement de l'utilisateur $j$ ;

- l'espacement entre sous-porteuses vaut $\dfrac{1}{2\tau_0}$ si $2\tau_0$ est la durée utile d'un symbole multiporteuse.

Le signal MC-CDMA est alors véhiculé dans le canal de propagation 13, et démodulé et égalisé dans le bloc 14 (démodulation OFDM et égalisation, avec suppression de l'intervalle de garde).

Un désétalement, correspondant à une opération sensiblement inverse de l'étalement, est alors mis en oeuvre délivrant une estimation des symboles de données complexes.

Cette technique de transmission MC-CDMA présente toutefois des inconvénients, liés à l'utilisation d'une modulation à porteuses multiples de type OFDM.

En effet, comme déjà indiqué, la modulation OFDM implique une perte d'efficacité spectrale due à l'insertion d'un intervalle de garde.

De plus, la fonction porte utilisée en OFDM (pour la mise en forme rectangulaire du signal) n'est pas bien localisée en fréquence, ce qui la rend sensible à toutes les dérives fréquentielles et la pénalise par rapport à des masques d'émission.

Par ailleurs, il est à noter que cette technique de transmission nécessite l'utilisation de l'ensemble des codes d'une matrice de codes d'étalement (c'est-à-dire une matrice de codes d'étalement pleine), pour atteindre le débit maximal du système. On utilise donc l'ensemble des codes associés à cette matrice d'étalement pour atteindre la capacité maximale du système.

*2.1.5 Les modulations OQAM-CDMA à valeurs réelles*

L'utilisation d'une modulation de type OQAM permet notamment de s'affranchir de l'utilisation d'un intervalle de garde.

Ainsi, il a également été proposé de combiner les techniques d'accès multiple de type CDMA aux modulations OQAM, dans lesquelles les symboles de données transmis sont à valeur réelle.

Cependant cette technique de transmission nécessite également l'utilisation d'une matrice de codes d'étalement pleine, pour atteindre le débit maximal du système.

**3. Exposé de l'invention**

L'invention propose une solution nouvelle qui ne présente pas l'ensemble de ces inconvénients de l'art antérieur, sous la forme d'un procédé d'émission d'un signal à porteuses multiples et à étalement de spectre formé d'une succession temporelle de symboles multiporteuses, mettant en oeuvre une modulation de type OQAM et une pluralité de codes d'étalement orthogonaux entre eux.

Selon l'invention, un tel procédé comprend les étapes définies par la revendication indépendante 1.

Ainsi, l'invention repose sur une approche nouvelle et inventive de la transmission de symboles de données à valeur complexe, dans un système combinant les modulations multiporteuses de type OQAM et des techniques d'accès multiple mettant en oeuvre un étalement des données. Plus précisément, l'invention permet de transmettre sur une même sous-porteuse une valeur complexe.

L'invention propose donc une solution permettant de transmettre des données complexes en OQAM/CDMA.

On rappelle en effet que les techniques de l'art antérieur relatives à l'OQAM imposaient que les symboles de données transmis dans un signal OFDM/OQAM soient à valeur réelle, afin de garantir l'orthogonalité entre les sous-porteuses dans le domaine réel, alors que l'invention permet de transmettre des symboles de données à valeur complexe en OFDM/OQAM.

On note également qu'on entend par « modulation multiporteuse de type OQAM », ici et dans la suite du document, une modulation à porteuses multiples de type BFDM/OQAM ou OFDM/OQAM.

L'invention permet également d'améliorer les performances de transmission, par rapport aux techniques classiques de type MC-CDMA (encore appelées OFDM/CDMA), grâce à l'utilisation d'une modulation de type OQAM. En effet, l'utilisation d'une modulation de ce type permet de s'affranchir de l'utilisation d'un intervalle de garde, ce qui permet d'accroître l'efficacité spectrale de la solution proposée. De plus, la forme d'onde associée à cette modulation peut être calculée pour un canal et des masques d'émission donnés.

L'association de techniques de type OQAM/CDMA selon l'invention présente donc des avantages en termes de flexibilité et de performances en débit par rapport aux techniques de l'art antérieur.

Selon une caractéristique de l'invention, le procédé d'émission comprend une étape d'obtention d'au moins un sous-ensemble de codes d'étalement, parmi un ensemble de codes d'étalement disponibles, et ladite étape d'étalement met en oeuvre une multiplication d'un symbole de données à valeur complexe par un code d'étalement issu dudit sous-ensemble.

L'invention permet ainsi d'atteindre le débit maximal de transmission d'un système de transmission sans utiliser la totalité des codes d'étalement disponibles, où le nombre de codes disponibles dépend du dimensionnement d'un réseau de communication dans lequel est mis en oeuvre l'invention.

Par conséquent, on diminue selon l'invention les interférences liées aux codes d'étalement, en n'utilisant que la moitié des codes disponibles par exemple. Autrement dit, on peut transmettre des données complexes en utilisant deux fois moins de codes d'étalement que les techniques de type MC-CDMA ou OQAM/CDMA à valeurs réelles, pour un débit visé identique, sans provoquer une forte perte d'orthogonalité entre les codes d'étalement, engendrant ainsi une diminution de l'interférence d'accès multiple (MAI).

En particulier, ledit sous-ensemble de codes d'étalement est déterminé en tenant compte d'un nombre de flux de transmission dans un réseau de communication dans lequel est mis en oeuvre l'invention.

Le nombre de flux de transmission correspond par exemple au nombre d'utilisateurs dans le réseau si chaque utilisateur utilise un seul code d'étalement. On rappelle qu'il est également possible qu'un utilisateur utilise plusieurs codes. De même, les codes d'étalement peuvent être associés à des services distincts disponibles dans le réseau.

Selon un aspect particulier de l'invention, ledit ensemble de codes d'étalement disponibles est défini par les colonnes d'une matrice d'étalement de taille $M = 2^{n_0}$, avec $n_0$ un entier positif, et l'étape d'obtention délivre deux sous-ensembles de codes d'étalement, comprenant chacun $M / 2$ codes.

Par exemple, la matrice d'étalement est une matrice de type Walsh-Hadamard, et les deux sous-ensembles sont déterminés de manière récursive.

Les codes d'étalement sont donc issus d'une matrice de Walsh-Hadamard ou d'une matrice dérivée des matrices Walsh-Hadamard, définissant par exemple les codes de Golay.

Selon un mode de réalisation particulier de l'invention, les deux sous-ensembles $S_1^{n_0}$ et $S_2^{n_0}$ sont déterminés de la manière suivante :

- pour une matrice d'étalement de taille $M = 2^{n_0} = 2^1$, le premier sous-ensemble $S_1^1$ comprend le code d'étalement correspondant à la première colonne de ladite matrice d'étalement, et le deuxième sous-ensemble $S_2^1$ comprend le code d'étalement correspondant à la deuxième colonne de ladite matrice d'étalement ;

- pour une matrice d'étalement de taille $M = 2^{n_0+1}$, le premier sous-ensemble $S_1^{n_0+1}$ comprend les codes d'étalement correspondant aux colonnes de ladite matrice d'étalement définies par les indices $j$ tels que $j = \left\{ S_1^{n_0} \bigcup \overline{S}_1^{n_0} \right\}$,

et le deuxième sous-ensemble $S_2^{n_0+1}$ comprend les codes d'étalement correspondant aux colonnes de ladite matrice d'étalement définies par les indices $j$ tels que $j = \left\{ S_2^{n_0} \bigcup \overline{S}_2^{n_0} \right\}$, pour

où :

en notant $i_{1,\alpha}$, pour $1 \le \alpha \le 2^{n_0-1}$, les indices des codes du sous-ensemble $S_1^{n_0}$, et

$i_{2,\beta}$, pour $1 \le \beta \le 2^{n_0-1}$, les indices des codes du sous-ensemble $S_2^{n_0}$, tels que

$$S_1^{n_0} = \left\{ i_{1,1}, i_{1,2}, i_{1,3}, \ldots, i_{1,2^{n_0}-1} \right\} \text{ et } S_2^{n_0} = \left\{ i_{2,1}, i_{2,2}, i_{2,3}, \ldots, i_{2,2^{n_0}-1} \right\},$$

on a:

- $$\overline{S}_1^{n_0} = \left\{ i_{2,1} + 2^{n_0}, i_{2,2} + 2^{n_0}, i_{2,3} + 2^{n_0}, \ldots, i_{2,2^{n_0}-1} + 2^{n_0} \right\}$$

- $$\overline{S}_2^{n_0} = \left\{ i_{1,1} + 2^{n_0}, i_{1,2} + 2^{n_0}, i_{1,3} + 2^{n_0}, \ldots, i_{1,2^{n_0}-1} + 2^{n_0} \right\}.$$

Selon une caractéristique particulière de l'invention, l'étape d'étalement utilise tous les codes d'étalement d'un desdits sous-ensembles, plus au moins un code d'étalement d'un autre sous-ensemble.

L'invention permet ainsi une augmentation du débit de transmission, par rapport au débit maximal proposé par les systèmes de l'art antérieur, c'est-à-dire une augmentation de la capacité du système, en utilisant plus de la moitié des codes d'étalement disponibles.

Selon un aspect particulier de l'invention, le procédé d'émission comprend une étape de codage espace-temps de type Alamouti, et est mis en oeuvre dans un système multi-antennes comprenant au moins deux antennes d'émission, et au moins une antenne de réception.

En effet, la solution proposée permettant de travailler avec des données complexes, il est possible d'utiliser en émission un schéma de codage MIMO (en anglais « Multiple Input, Multiple Output », en français « entrées multiples, sorties multiples ») ou MISO (en anglais « Multiple Input, Single Output », en français « entrées multiples, sortie unique ») de type Alamouti.

Un autre aspect de l'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'émission décrit ci-dessus. Ce produit programme est défini par la revendication indépendante 9. Dans un autre mode de réalisation, l'invention concerne un dispositif d'émission comme défini par la revendication indépendante 10.

Un tel dispositif d'émission est notamment adapté à mettre en oeuvre le procédé d'émission décrit précédemment. Il s'agit par exemple d'une station de base, ou d'un terminal de type radiotéléphone, ordinateur portable, assistant personnel de type PDA (en anglais « Personal Digital Assistant »).

L'invention concerne également un signal selon la revendication indépendante 11.

Un tel signal peut notamment être émis selon le procédé d'émission décrit précédemment. Ce signal pourra bien sûr comporter les différentes caractéristiques relatives au procédé d'émission selon l'invention.

Un autre aspect de l'invention concerne un procédé de réception, un produit programme d'ordinateur correspondant et un dispositif de réception correspondant, selon les revendications indépendantes 12, 15 et 16 respectivement.

L'invention propose ainsi une solution permettant d'estimer des données complexes, transmises dans un système combinant les modulations multiporteuses de type OQAM et des techniques d'accès multiple mettant en oeuvre un étalement des données.

En particulier, la deuxième étape d'égalisation du procédé de réception est particulièrement intéressante dès lors que le nombre de codes d'étalement mis en oeuvre permet de dépasser l'efficacité spectrale théorique des systèmes de l'art antérieur de type MC-CDMA.

Cette efficacité spectrale est notamment atteinte lorsque l'étape d'étalement utilise tous les codes d'étalement d'un sous-ensemble, plus au moins un code d'étalement d'un autre sous-ensemble.

Un dispositif de réception correspondant est par exemple un terminal de type radiotéléphone, ordinateur portable, assistant personnel de type PDA (en anglais « Personal Digital Assistant »).

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente un système de transmission de type MC-CDMA selon l'art antérieur ;
- la figure 2 illustre les principales étapes du procédé d'émission selon l'invention ;
- la figure 3 présente un système de transmission de type OQAM-CDMA à valeurs complexes selon l'invention ;
- les figures 4 à 6 illustrent les performances de l'invention comparées aux techniques de l'art antérieur ;
- les figures 7 et 8 présentent respectivement la structure simplifiée d'un dispositif d'émission et d'un dispositif de réception selon un mode de réalisation particulier de l'invention.

## 5. Description d'un mode de réalisation de l'invention

### 5.1 Principe général

Le principe général de l'invention repose sur la transmission de données à valeur complexe dans un système de transmission combinant une technique d'accès par répartition de codes et une modulation à porteuses multiples de type OQAM.

L'invention propose donc une technique d'émission qui permette la transmission de données à valeur complexe, et une technique de réception qui permette une estimation précise de ces données à valeur complexe.

La figure 2 illustre les principales étapes de l'émission d'un signal à porteuses multiples et à étalement de spectre selon l'invention.

Côté émission, un signal de données source 21 à émettre est représenté (22) sous la forme d'au moins un symbole de données à valeur complexe 23. Le procédé d'émission selon l'invention comprend une étape d'étalement 24 d'un ou plusieurs symboles de données à valeur complexe 23 sur un ensemble de sous-porteuses d'au moins un symbole multiporteuse, chaque sous-porteuse modulant une valeur complexe, délivrant un signal à porteuses multiples et à étalement de spectre 25 formé d'une succession temporelle de symboles multiporteuses.

Côté réception, le procédé de réception selon l'invention comprend une étape de désétalement des symboles multiporteuses, correspondant à une opération inverse à l'opération d'étalement, délivrant un ou plusieurs symboles de données estimés à valeur complexe, représentatifs d'un signal de données source 21.

On rappelle qu'on entend par modulation OQAM aussi bien les modulations de type OFDM/OQAM que les modulations BFDM/OQAM.

### 5.2 Description d'un mode de réalisation particulier

Plus précisément, selon un mode de réalisation particulier, l'invention repose sur une sélection des codes d'étalement à utiliser lors de l'émission, pour limiter l'interférence entre les symboles de données en émission et en réception.

Si l'on considère un ensemble de N codes d'étalement disponibles dans le réseau de communication (ce nombre de codes disponibles étant déterminé en fonction du dimensionnement du réseau), l'invention propose selon ce mode de réalisation d'utiliser uniquement certains de ces codes disponibles.

Par exemple, si l'on se place dans le contexte d'une transmission en lien descendant entre une station de base et un terminal de radiocommunication, la station de base peut déterminer un sous-ensemble de codes d'étalement parmi l'ensemble des codes disponibles, et mettre en oeuvre une multiplication d'un symbole de données à valeur complexe par un code d'étalement issu du sous-ensemble.

Dans le contexte d'une transmission en lien montant entre un terminal de radiocommunication et une station de base, la station de base peut également déterminer un sous-ensemble de codes d'étalement parmi l'ensemble des codes disponibles, et transmettre au terminal ce sous-ensemble de codes, ou une information représentative de ce sous-ensemble. Le terminal peut alors mettre en oeuvre une multiplication d'un symbole de données à valeur complexe par un code d'étalement issu du sous-ensemble.

On rappelle en effet que les codes d'étalement peuvent être associés à des utilisateurs distincts, et/ou à des services distincts disponibles dans le réseau. Plusieurs codes d'étalement peuvent également être associées à un même utilisateur ou un même service.

La solution proposée permet donc d'augmenter la capacité du système de transmission en transmettant des données à valeur complexe, alors qu'on rappelle que l'Homme du Métier considère que la transmission de symboles de données à valeur complexe en OQAM n'est pas possible, notamment en raison de l'interférence entre symboles générée en émission et en réception.

De plus, la solution proposée selon l'invention ne nécessite pas l'utilisation d'un procédé itératif en réception.

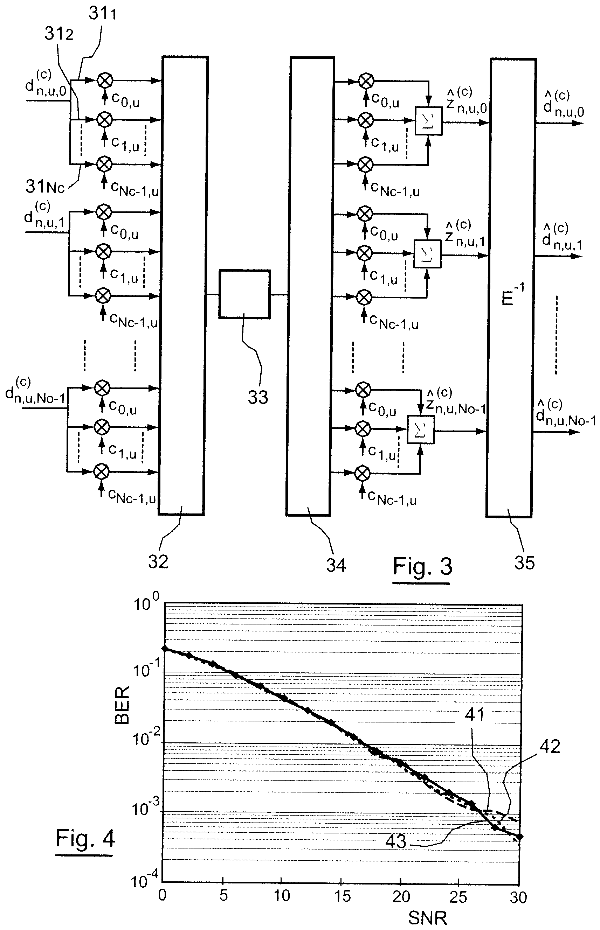

On décrit plus précisément en relation avec la figure 3 la structure générale d'un système de transmission OQAM-CDMA selon l'invention, pour un utilisateur $u$.

On note plus précisément :

- $U$ le nombre d'utilisateurs transmettant de l'information ;

- $d_{n,u,r}^{(c)}$ les données complexes à transmettre par l'utilisateur $u$ à l'instant $n\tau_0$ sur le groupe de $N_c$ sous-porteuses d'indice $r$, avec $N_c$ la longueur des codes d'étalement et $\tau_0$ est la durée utile d'un symbole multiporteuse OQAM ;

- $c_{p,u}$ le code attribué à un utilisateur $u$ sur la porteuse d'indice $p$, où $p=\{0,...,N_c\text{-}1\}$ ;
- $L$ la longueur de la (ou des) fonction(s) prototype utilisée(s) ; et
- $Q$ la taille de la trame.

Comme illustré en relation avec la figure 3, chaque symbole de données à valeur complexe $d_{n,u,0}^{(c)}$, $d_{n,u,1}^{(c)}$, ..., $d_{n,u,N_0-1}^{(c)}$ subit $N_c$ répliques.

Considérant par exemple le symbole de données $d_{n,u,0}^{(c)}$, à chaque réplique $31_1$, $31_2$, ..., $31_{Nc}$ du symbole de données est appliqué un «chip» du code d'étalement propre à chaque utilisateur et/ou à chaque service.

Par exemple le chip $c_{0,u}$ du code d'étalement associé à l'utilisateur $u$ est appliqué à la première réplique $31_1$ du symbole de données $d_{n,u,0}^{(c)}$, le chip $c_{1,u}$ est appliqué à la deuxième réplique $31_2$ du symbole de données $d_{n,u,0}^{(c)}$, et le chip $c_{N_c\text{-}1,u}$ est appliqué à la dernière réplique $31_{Nc}$ du symbole de données $d_{n,u,0}^{(c)}$.

On multiplie donc des symboles de données à valeur complexe par des codes d'étalement dépendant de la sous-porteuse considérée.

En particulier, les codes d'étalement sont choisis parmi un sous-ensemble de codes, considéré dans un ensemble de codes disponibles dans le réseau de communication. Ces codes sont notamment choisis de façon à limiter l'interférence affectant les symboles de données en réception.

Les symboles issus de l'opération d'étalement subissent alors une modulation à porteuses multiples de type OQAM 32.

Puis le signal OQAM-CDMA est véhiculé dans le canal de propagation 33.

Le principe général de l'émission repose donc sur la mise en oeuvre d'un système OQAM-CDMA transmettant des symboles à valeur complexe avec un choix approprié de codes.

Côté réception, le signal reçu est démodulé et égalisé (ou égalisé et démodulé) suivant une technique d'égalisation de type ZF (en anglais « Zero Forcing »), ou MMSE (en anglais « Minimum Mean Squared Error ») au cours d'une première étape d'égalisation 34.

Les symboles multiporteuses sont alors désétalés, en multipliant les sous-porteuses par les codes correspondants et en additionnant les résultats, générant des symboles de données estimés à valeur complexe présentant des interférences entre symboles.

Finalement, une deuxième étape d'égalisation est mise en oeuvre, par exemple sous la forme d'une matrice $E^{-1}$ de suppression des interférences, pour réduire l'interférence affectant les symboles de données estimés à valeur complexe. Cette matrice $E^{-1}$ correspond à l'inverse d'une matrice E représentative des interférences, encore appelée matrice d'interférence. En particulier, l'expression de la matrice $E^{-1}$ de suppression des interférences dépend du nombre de codes d'étalement utilisés par le système.

Plus précisément, cette deuxième étape d'égalisation permet de limiter l'interférence d'accès multiple.

*5.3 Obtention d'un sous-ensemble de codes d'étalement*

Classiquement, l'ensemble des codes d'étalement disponibles au sein d'un réseau est défini par les colonnes d'une matrice d'étalement. Par exemple, la matrice d'étalement est une matrice de type Walsh-Hadamard. Les codes d'étalement sont donc issus d'une matrice de Walsh-Hadamard ou de matrices dérivées des matrices Walsh-Hadamard, définissant par exemple les codes de Golay.

Selon l'invention, on détermine au moins un sous-ensemble de codes d'étalement, parmi cet ensemble de codes d'étalement disponibles.

Par exemple, l'étape d'obtention délivre deux sous-ensembles de codes d'étalement, déterminés de manière récursive. Les codes d'étalement d'un sous-ensemble sont choisis de façon à maîtriser les interférences en réception. Autrement dit, le choix de ces codes permet une orthogonalité complexe des sous-porteuses.

Plus précisément, les sous-ensembles de codes d'étalement sont définis de la manière suivante :

- pour une matrice d'étalement de taille $M = 2^{n_0} = 2^1$, le premier sous-ensemble $S_1^1$ comprend le code d'étalement correspondant à la première colonne de la matrice d'étalement, et le deuxième sous-ensemble $S_2^1$ comprend le code d'étalement correspondant à la deuxième colonne de la matrice d'étalement ;

- pour une matrice d'étalement de taille $M = 2^{n_0+1}$, le premier sous-ensemble $S_1^{n_0+1}$ comprend les codes d'étalement correspondant aux colonnes de ladite matrice d'étalement définies par les indices $j$ tels que $j = \left\{ S_1^{n_0} \bigcup \overline{S}_1^{n_0} \right\}$,

et le deuxième sous-ensemble $S_2^{n_0+1}$ comprend les codes d'étalement correspondant aux colonnes de ladite matrice d'étalement définies par les indices $j$ tels que $j = \left\{ S_2^{n_0} \bigcup \overline{S}_2^{n_0} \right\}$, pour $1 \leq j \leq 2^{n_0+1}$,

où :

en notant $i_{1,\alpha}$, pour $1 \leq \alpha \leq 2^{n_0-1}$ les indices des codes du sous-ensemble $S_1^{n_0}$, et

$i_{2,\beta}$, pour $1 \leq \beta \leq 2^{n_0-1}$ les indices des codes du sous-ensemble $S_2^{n_0}$, tels que

$$S_1^{n_0} = \left\{ i_{1,1}, i_{1,2}, i_{1,3}, \ldots, i_{1,2^{n_0-1}} \right\} \text{ et } S_2^{n_0} = \left\{ i_{2,1}, i_{2,2}, i_{2,3}, \ldots, i_{2,2^{n_0-1}} \right\},$$

on a :

- $\overline{S}_1^{n_0} = \left\{ i_{2,1} + 2^{n_0}, i_{2,2} + 2^{n_0}, i_{2,3} + 2^{n_0}, \ldots, i_{2,2^{n_0-1}} + 2^{n_0} \right\}$

- $\overline{S}_2^{n_0} = \left\{ i_{1,1} + 2^{n_0}, i_{1,2} + 2^{n_0}, i_{1,3} + 2^{n_0}, \ldots, i_{1,2^{n_0-1}} + 2^{n_0} \right\}.$

On présente ci-après un exemple de détermination des sous-ensembles de codes d'étalements, pour différentes tailles de matrices de Walsh-Hadamard.

On considère par exemple une matrice de Walsh-Hadamard de taille $N_c = 2^{n_0} = 2^1$ :

$$WH^1 = \begin{pmatrix} 1 & 1 \\ 1 & -1 \end{pmatrix}.$$

L'ensemble de codes disponibles est constitué par la première colonne de la matrice, définissant un code attribué par exemple à un premier utilisateur, et la deuxième colonne de la matrice, définissant un autre code attribué par exemple à un deuxième utilisateur.

Selon l'invention, on sélectionne un sous-ensemble parmi cet ensemble de code.

Le premier sous-ensemble correspond donc à la première colonne de la matrice, indicée 1, c'est-à-dire $S_1^1 = \begin{pmatrix} 1 \\ 1 \end{pmatrix}$, et le deuxième sous-ensemble à la deuxième colonne de la matrice, indicée 2, c'est-à-dire $S_2^1 = \begin{pmatrix} 1 \\ -1 \end{pmatrix}$.

Pour une matrice Walsh-Hadamard de taille $N_c = 2^{n_0+1} = 2^2 = 4$, on a :

$$WH^2 = \begin{pmatrix} 1 & 1 & 1 & 1 \\ 1 & -1 & 1 & -1 \\ 1 & 1 & -1 & -1 \\ 1 & -1 & -1 & 1 \end{pmatrix}$$

On détermine donc les premier et deuxième sous-ensembles de la manière suivante, en notant $j$ l'indice de la colonne de la matrice d'étalement :

- pour le premier sous-ensemble $S_1^2$, $j = S_1^1 \bigcup \overline{S}_1^1 = \{1\} \bigcup \{2 + 2^1\} = \{1,4\}$, ce qui signifie que $S_1^2$ comprend les codes d'étalement $\begin{pmatrix} 1 \\ 1 \\ 1 \\ 1 \end{pmatrix}$ et $\begin{pmatrix} 1 \\ -1 \\ -1 \\ 1 \end{pmatrix}$ ;

- pour le deuxième sous-ensemble $S_2^2$, $j = S_2^1 \bigcup \overline{S}_2^1 = \{2\} \bigcup \{1 + 2^1\} = \{2,3\}$, ce qui signifie que $S_2^2$ comprend les codes d'étalement $\begin{pmatrix} 1 \\ -1 \\ 1 \\ -1 \end{pmatrix}$ et $\begin{pmatrix} 1 \\ 1 \\ -1 \\ -1 \end{pmatrix}$.

Puis pour une matrice Walsh-Hadamard de taille $N_c = 2^{n_0+1} = 2^3 = 8$, on a :

- pour le premier sous-ensemble $S_1^3$, $j = S_1^2 \bigcup \overline{S}_1^2 = \{1,4\} \bigcup \{2 + 2^2, 3 + 2^2\}$, soit $j = \{1,4,6,7\}$,

- pour le deuxième sous-ensemble $S_2^3$, $j = S_2^2 \bigcup \overline{S}_2^2 = \{2,3\} \bigcup \{1 + 2^2, 4 + 2^2\}$ soit $j = \{2,3,5,8\}$ ;

et ainsi de suite.

Ainsi, selon l'invention, plutôt que d'utiliser les huit codes associés aux huit colonnes de la matrice Walsh-Hadamard de taille 8, on sélectionne un sous-ensemble de codes d'étalement, par exemple le sous-ensemble $S_1^3$, et on utilise les codes de ce sous-ensemble lors de l'étape d'étalement en émission.

On utilise ainsi deux fois moins de codes d'étalement qu'un système MC-CDMA par exemple, pour un débit visé identique, ce qui permet de réduire l'interférence d'accès multiple.

De plus, si l'on utilise plus de la moitié des codes d'étalement disponible, soit par exemple tous les codes d'étalement du sous-ensemble $S_1^3$ et un code d'étalement du sous-ensemble $S_2^3$, on peut augmenter le débit de transmission, c'est-à-dire la capacité du système, par rapport aux techniques de l'art antérieur.

Finalement, du fait de la transmission de données à valeur complexe, et non plus réelle, en OQAM/CDMA, on peut noter que l'invention peut fonctionner en MIMO ou MISO, avec un codage espace-temps de type Alamouti en émission et un décodage espace-temps de type Alamouti en réception.

*5.4 Réduction de l'interférence d'accès multiple*

Afin de faciliter la compréhension de l'invention, on introduit ci-après quelques hypothèses pour décrire la méthode de résolution proposée. L'Homme du Métier étendra facilement l'enseignement décrit au cas général.

On considère tout d'abord un canal parfait. Ainsi, avec un dimensionnement approprié du système, une égalisation parfaite par porteuse équivaut à ne pas avoir de canal de transmission. On néglige également, dans un premier temps, l'impact du bruit.

On se place également en situation de diversité maximale, ce qui signifie que le nombre de sous-porteuses modulées est égal à la taille du code d'étalement.

Par conséquent, on utilise désormais les notations suivantes :

- $d_{n,u}^{(c)}$ le symbole de données à valeur complexe à transmettre par l'utilisateur $u$ ;
- $c_{m,u}$ le code attribué à un utilisateur $u$ sur la sous-porteuse d'indice $m$ ;
- $a_{m,n,u} = c_{m,u} d_{n,u}^{(c)}$ le symbole multiporteuse complexe transmis à l'instant $n\tau_0$ sur la porteuse $m$.

On suppose également que :

- les codes d'étalement sont orthogonaux entre eux ;
- la base de modulation et de démodulation est orthogonale (sachant qu'une extension au cas biorthogonal est possible) ;
- la fonction prototype g est réelle ;
- la longueur du filtre prototype est un multiple de $M$, tel que $L = bM = 2bN$.

Ainsi, les symboles multiporteuses sont transmis par trame de longueur $Q$ par un signal $s(t)$ à porteuses multiples et à étalement de spectre, qui en bande de base s'écrit :

$$s(t) = \sum_{n=0}^{Q-1} \sum_{m=0}^{2N-1} x_{m,n} g_{m,n}(t) \tag{5}$$

avec

$$x_{m,n} = \sum_{u=0}^{U-1} a_{m,n,u} \, .$$

Le canal étant supposé parfait, on considère que le signal reçu, côté réception, est également le signal $s(t)$.

On décrit ci-après comment le récepteur peut retrouver les données $d_{n,u}^{(c)}$ transmises à partir de $s(t)$.

Pour cela on calcule tout d'abord l'expression du signal complexe reçu par un utilisateur $u_0$ donné après désétalement par son propre code, ce qui donne :

$$z_{n_0,u_0}^{(c)} = \sum_{p=0}^{2N-1} c_{p,u_0} \langle y(t), g_{p,n_0}(t) \rangle$$

$$= \sum_{p=0}^{2N-1} c_{p,u_0} \sum_{n=0}^{Q-1} \sum_{m=0}^{2N-1} x_{m,n} \langle g_{m,n}(t), g_{p,n_0}(t) \rangle_c$$

où $\langle .,. \rangle_c$ désigne le produit scalaire usuel en complexe.

La base de fonctions $g_{m,n}$ étant supposée orthogonale dans le corps des réels, on a :

$$\langle g_{m,n}(t), g_{p,n_0}(t) \rangle_c = \delta_{m-p,n-n_0} + j\gamma_{m,n}^{(p,n_0)} I_{|n-n_0|<2b} \tag{6}$$

où $I_{|n-n_0|<2b}$ est la fonction indicatrice de l'intervalle de largeur $2b$ autour de $n_0$ et $\gamma_{m,n}^{p,n_0}$ est un terme réel qui peut se calculer à partir de la fonction d'ambiguïté de $g(t)$. La propriété d'orthogonalité réelle permet donc de réécrire le signal $z$ comme suit :

$$z_{n_0,u_0}^{(c)} = \sum_{p=0}^{2N-1} c_{p,u_0} \sum_{n=0}^{Q} \sum_{m=0}^{2N-1} x_{m,n}(\delta_{m-p,n-n_0} + j\gamma_{m,n}^{(p,n_0)} \delta_{|n-n_0|<2b}) \tag{7}$$

$$= \sum_{p=0}^{2N-1} c_{p,u_0}(\sum_{n=-2b+1}^{2b-1} \sum_{m=0}^{2N-1}(\sum_{u=0}^{U-1} c_{m,u} d_{n+n_0,u}^{(c)}(\delta_{m-p,n-n_0} + j\gamma_{m,n+n_0}^{(p,n_0)}))) \tag{8}$$

$$= \sum_{p=0}^{2N-1} c_{p,u_0} \sum_{u=0}^{U-1} c_{p,u} d_{n_0,u}^{(c)} + j(\sum_{p=0}^{2N-1} \sum_{\substack{n=-2b+1 \\ n\neq 0}}^{2b-1} \sum_{m=0}^{2N-1} \sum_{u=0}^{U-1} c_{p,u_0} c_{m,u} d_{n+n_0,u}^{(c)} \gamma_{m,n+n_0}^{(p,n_0)}) \tag{9}$$

$$= \sum_{u=0}^{U-1} d_{n_0,u}^{(c)}(\sum_{p=0}^{2N-1} c_{p,u_0} c_{p,u}) + j(\sum_{u=0}^{U-1} \sum_{\substack{n=-2b+1 \\ n\neq 0}}^{2b-1} d_{n+n_0,u}^{(c)}(\sum_{p=0}^{2N-1} \sum_{m=0}^{2N-1} c_{p,u_0} c_{m,u} \gamma_{m,n+n_0}^{(p,n_0)})) \tag{10}$$

Les codes d'étalement étant orthogonaux, on a :

$$\sum_{p=0}^{2N-1} c_{p,u_0} c_{p,u} = \begin{cases} 1 & \text{si } u = u_0 \\ 0 & \text{si } u \neq u_0 \end{cases}$$

ce qui permet de simplifier l'équation (10) :

$$z_{n_0,u_0}^{(c)} = d_{n_0,u_0}^{(c)} + j(\sum_{u=0}^{U-1} \sum_{\substack{n=-2b+1 \\ n\neq 0}}^{2b-1} d_{n+n_0,u}^{(c)}(\sum_{p=0}^{2N-1} \sum_{m=0}^{2N-1} c_{p,u_0} c_{m,u} \gamma_{m,n+n_0}^{(p,n_0)})) \tag{11}$$

Pour exprimer les signaux reçus par l'ensemble des $U$ utilisateurs lors de la transmission d'une trame de longueur $Q$, on introduit les vecteurs $X$ et $Z$ qui correspondent respectivement à l'ensemble des données transmises, et aux informations reçues après désétalement :

$$X = [d_{0,u_0}^{(c)}, d_{1,u_0}^{(c)}, \cdots, d_{Q-1,u_0}^{(c)}, d_{0,u_1}^{(c)}, d(c)_{1,u_1}, \cdots, d_{Q-1,u_1}^{(c)}, \cdots, d_{0,u_{U-1}}^{(c)}, d_{1,u_{U-1}}^{(c)}, \cdots, d_{Q-1,u_{U-1}}^{(c)}]^t$$

$$Z = [z_{0,u_0}^{(c)}, z_{1,u_0}^{(c)}, \cdots, z_{Q,u_0}^{(c)}, z_{0,u_1}^{(c)}, z_{1,u_1}^{(c)}, \cdots, z_{Q,u_1}^{(c)}, \cdots, z_{0,u_{U-1}}^{(c)}, z_{1,u_{U-1}}^{(c)}, \cdots, z_{Q,u_{U-1}}^{(c)}]^t$$

où $^t$ indique l'opération de transposition.

Sous forme vectorielle, l'opération de démodulation et de désétalement peut donc écrire :

$$Z = EX \qquad\qquad (12)$$

où $E$ est la matrice représentative des interférences affectant le signal à porteuses multiples et à étalement de spectre, encore appelée matrice d'interférence.

Les éléments de la matrice $E$ dépendent uniquement de la fonction prototype et des codes d'étalement utilisés. Sa dimension est $Q \times U$.

De manière générale, l'équation (12) permet d'extraire les données transmises, soit par inversion de la matrice E, soit par des algorithmes de complexité plus réduite (par exemple basés sur un critère de type ZF ou MMSE), dépendants de la charge du système (nombre de codes utilisés par exemple).

On considérant des codes d'étalement issus d'une matrice de Walsh-Hadamard et un choix de phase de la modulation OQAM tel que $\phi_{m,n} = \frac{\pi}{2}\left(m + n + 2mn\right)$, on peut vérifier que :

- pour U = 1, la matrice E est la matrice identité, comme démontré en annexe A. Dans ce cas, on a $z_{n,u_0}^{(c)} = d_{n,u_0}^{(c)}$, ce qui signifie que les données pour chaque utilisateur sont directement obtenues après désétalement ;

- pour $U \leq \dfrac{M}{2}$ et un choix approprié des $U$ codes d'étalement (un code d'étalement étant associé à chaque utilisateur), $E$ est la matrice identité, comme démontré en annexe B. Dans ce cas, on a également $z_{n,u_0}^{(c)} = d_{n,u_0}^{(c)}$. On obtient de plus une réduction de l'interférence d'accès multiple (MAI) ;

- pour $U > \dfrac{M}{2}$, l'ajout d'un code supplémentaire se traduit par une matrice E non inversible. Dans ce cas deux solutions sont préconisées :

    o dans le cas où les différentes séquences possibles de données transmises $X$ donnent, par multiplication par $E$, des séquences disjointes, la deuxième étape d'égalisation met en oeuvre un algorithme de type maximum de vraisemblance (MV), même si la matrice $E$ est non-inversible ;

    o il est également possible de modifier la matrice d'interférence $E$ pour la rendre inversible, en annulant par exemple les termes d'interférence les plus faibles. Cette annulation des termes d'interférences les plus faibles n'introduit pas de dégradation trop importante des performances.

On peut noter qu'en appliquant un traitement différent suivant que les codes interfèrent ou n'interfèrent pas entre eux, il est possible de réduire la complexité de calcul.

Ainsi, pour les $\dfrac{M}{2}$ codes qui n'interfèrent pas entre eux, la transmission peut s'effectuer à la cadence maximale, c'est-à-dire qu'un symbole de données à valeur complexe est transmis tous les $\tau_0$.

Pour les $\left(U - \dfrac{M}{2}\right)$ autres codes, une transmission à un taux de $\dfrac{1}{4b-1}$ permet d'éliminer les interférences et de réaliser une estimation par paquets de 4$b$-1 symboles avec une matrice d'interférence E de dimension (4$b$-1) $\times$ $U$.

On décrit ci-après trois exemples de mise en oeuvre de l'invention.

*A) Cas* $U = \dfrac{M}{2}$

On compare tout d'abord par simulation, comme illustré en figure 4, la transmission de données sur un canal de Rayleigh selon les techniques de l'art antérieur MC-CDMA (courbe référencée 42) et OQAM-CDMA à valeur réelle fonctionnant à pleine charge $U = M$ (courbe référencée 41), avec de l'OQAM-CDMA complexe selon l'invention fonctionnant à mi-charge $U = M/2$ (courbe référencée 43).

On rappelle que l'ensemble de ces techniques conduit à la même efficacité spectrale, en l'absence d'intervalle de garde.

Les autres caractéristiques de ces systèmes fonctionnant à diversité fréquentielle maximale (c'est-à-dire $N_c = M$) sont :

- un nombre de sous-porteuses $M$ égal à 32 ;
- une première égalisation de type ZF ;
- dans le cas de l'OQAM, le filtre prototype utilisé est déduit de la fonction IOTA de longueur $4T0$ ($b = 4$) ;
- dans le cas de l'OQAM-CDMA à valeurs complexes, on considère un sous-ensemble de seize codes selon l'invention, choisis de manière à ne pas interférer entre eux en suivant la technique présentée ci-dessus, qui délivre deux sous-ensemble de codes $S_1^{32}$ et $S_2^{32}$, tels que, en notant $j$ l'indice de la colonne de la matrice d'étalement :

le premier sous-ensemble $S_1^{32}$ est défini par $j = \{1,4,6,7,10,11,13,16,18,19,21,24,25,28,30,31\}$ et

le deuxième sous-ensemble $S_2^{32}$ est défini par $j = \{2,3,5,8,9,12,14,15,17,20,22,23,26,27,29,32\}$.

La figure 4 montre que dans le cas d'une première égalisation de type ZF, les trois techniques présentées confèrent les mêmes résultats en terme de taux d'erreur binaire (en anglais « Binary Error Rate » BER), en fonction du rapport signal à bruit (en anglais « Signal to Noise ratio » SNR).

De plus, comparé aux techniques de type MC-CDMA, la technique selon l'invention permet de s'affranchir d'un intervalle de garde, ce qui lui confère une plus grande efficacité spectrale.

$$B)\ Cas\ U \leq \frac{M}{2}$$

On présente ci-après les performances des techniques de l'art antérieur et de l'invention en fonction du nombre de codes d'étalement utilisé, correspondant à un pourcentage de charge du système.

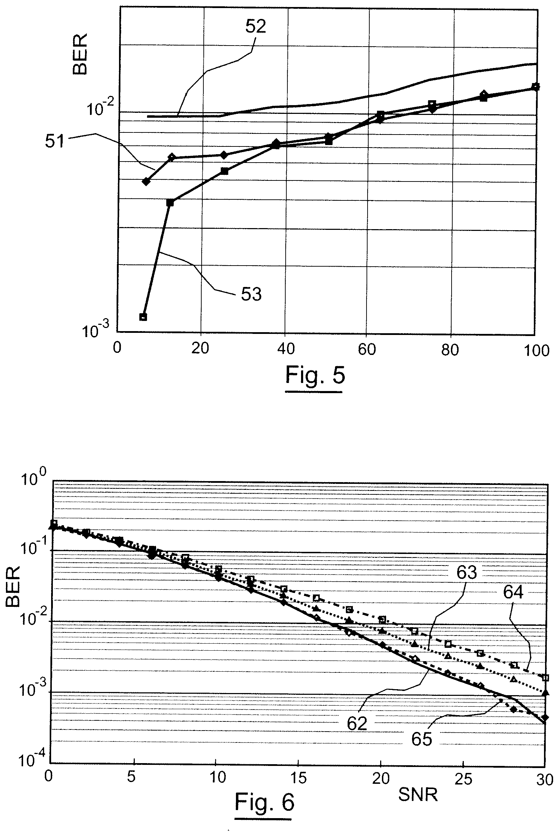

Plus précisément, on compare en figure 5 le taux d'erreur en fonction du pourcentage de charge du système MC-CDMA (courbe référencée 52) et du système OQAM/CDMA à valeurs réelles (courbe référencée 51), au système OQAM/CDMA à valeurs complexes selon l'invention (courbe référencée 53), pour une valeur de $Eb/N0$ fixée et valant 10dB.

Le profil du canal pour cette simulation est le suivant :

- nombre de trajets : 3 ;
- délais (en $\mu$s) : 0 ; 0,2527 ; 0,32 ;
- puissances (en dB) : -0 ; -3 ; -2,2204 ;
- fréquence porteuse : $fc = 1000MHz$ ;
- taille de la FFT : 32 ;
- fréquence d'échantillonnage : 10MHz ;
- taille de l'intervalle de garde (en $\mu$s) : 0,5.

On utilise une première technique d'égalisation de type MMSE en réception. La matrice d'interférence $E$ équivaut alors à la matrice identité, quelque soit la charge du système comprise entre 0 et 100%, conduisant alors à une complexité similaire pour les trois systèmes.

La figure 5 montre que les performances obtenues en OQAM/CDMA à valeurs réelles ou complexes devancent celles obtenues en MC-CDMA, quelque soit la charge du système, grâce à la non insertion d'un intervalle de garde.

De plus, le système OQAM/CDMA modulant des symboles de données complexes selon l'invention permet d'obtenir un gain par rapport à l'utilisation de symboles de données réels jusqu'à une charge de système de 30% environ.

Ce gain provient notamment, comme préalable énoncé, de la plus faible quantité d'interférence d'accès multiple (MAI) obtenue, du fait de l'utilisation d'un nombre de codes d'étalement inférieur (par exemple deux fois moindre) lors de la transmission de symboles de données à valeur complexe en OQAM. Après 30% de charge, les performances des deux systèmes OQAM à valeurs réelle et complexe sont quasi-identiques.

*C) Cas* $U > \dfrac{M}{2}$

On reprend ici un contexte de simulation similaire aux cas précédemment traités.

On ajoute de plus, dans le cas OQAM-CDMA à valeur complexe selon l'invention, un code supplémentaire appartenant à un deuxième sous-ensemble aux seize codes du premier sous-ensemble (on rappelle que chaque sous-ensemble comprend, selon cet exemple de réalisation, la moitié des codes disponibles dans la matrice de Walsh-Hadamard n'interférant pas entre eux).

L'ensemble des dix-sept codes d'étalement est donc formé par la réunion d'un premier sous-ensemble, par exemple $S_2^{32}$, avec un code du deuxième sous-ensemble, par exemple le code d'indice 1 tel que, en notant $j$ l'indice de la colonne de la matrice d'étalement, l'ensemble S est défini par :

$$j = \left\{1,2,3,5,8,9,12,14,15,17,20,22,23,26,27,29,32\right\}$$

De manière à limiter l'interférence provoquée par le code d'indice 1, on choisit le filtre prototype orthogonal le plus court et le plus simple possible, i.e. la fonction porte avec $b = 1$, et on transmet à la cadence 1/3 pour le code d'indice 1.

On obtient alors une matrice d'interférence E telle que :

$$E = \begin{pmatrix} I_{3\times 16, 3\times 16} & j * y^t \\ j * y & 1 \end{pmatrix}$$

avec $y$ = [0.9801, 0, 0.0199, 0.0852, 0, 0.0852, 0.0247, 0, 0.0247, 0.0247, 0, 0.0247, 0.0277, 0, 0.0277, 0.0277, 0, 0.0277, 0.0181, 0, 0.0181, 0.0374, 0, 0.0374, 0.0293, 0, 0.0293, 0.0293, 0, 0.0293, 0.0183, 0, 0.0183, 0.0404, 0, 0.0403, 0.0194, 0, 0.0194, 0.0503, 0, 0.0503, 0.0238, 0, 0.0238, 0.0238, 0, 0.0238]

On note que la matrice E est non inversible ($\det(E)$ = 0 car $\|y\|$ = 1).

Pour la rendre inversible, on propose d'annuler les très faibles valeurs de $y$ (par exemple les valeurs inférieures à 0,04), ce qui est équivalent à introduire un bruit de valeur inférieure à -34 dB. On approxime donc $y$ par :

$$\bar{y} = [0.9801, 0, 0, 0.0852, 0, 0.0852, 0.0, 0, 0.0247, 0.0, 0, 0.0, 0, 0, 0, 0, 0,$$

$$0, 0, 0, 0, 0, 0, 0, 0, 0, 0, 0, 0, 0, 0, 0, 0, 0, 0, 0, 0, 0, 0.0503, 0, 0.0503, 0, 0, 0,$$

$$0, 0, 0]$$

La matrice d'interférence $E$ ainsi modifiée devient inversible. On note $E^{-1}$ l'inverse de la matrice $E$.

Plus précisément, la figure 6 illustre les performances d'un système MC-CDMA classique (courbe référencée 62) et les performances d'un système selon l'invention :

- mettant en oeuvre 16 codes d'étalement (courbe référencée 63) ;
- mettant en oeuvre 17 codes d'étalement et une deuxième égalisation basée sur l'inversion de la matrice $E$ modifiée et une technique de type ZF (courbe référencée 64) ;
- mettant en oeuvre 17 codes d'étalement et une deuxième égalisation de type MV sur la matrice $E$ modifiée (courbe référencée 65) ;

On peut ainsi remarquer que l'ajout d'un code supplémentaire dégrade légèrement les performances de l'OQAM-CDMA à valeurs complexes selon l'invention.

Toutefois cette dégradation ne devient perceptible que pour des SNR au delà de 10dB, c'est-à-dire à partir d'un taux d'erreur binaire de l'ordre de $5.10^{-2}$. En conséquence, les mêmes simulations effectuées avec des codes correcteurs d'erreurs produisent des performances sensiblement équivalentes puisque le déclenchement du processus de décodage a eu lieu, gardant les écarts de courbes obtenus en ce point sans codage.

De plus, l'utilisation de plus de la moitié des codes d'étalement disponibles permet une augmentation de la capacité du système.

Ainsi, un aspect de l'invention propose l'utilisation d'une matrice $E^{-1}$ spécifique de suppression des interférences en réception, dés que le nombre de codes d'étalement mis en oeuvre permet de dépasser l'efficacité spectrale théorique des systèmes MC-CDMA classiques.

On rappelle que la matrice $E^{-1}$ permet d'estimer les informations transmises soit par inversion de la matrice E, soit par des algorithmes de complexité plus réduite (par exemple basés sur un critère de type ZF ou MMSE), dépendants de la charge du système (nombre de codes utilisés par exemple).

*5.5 Structures des dispositifs d'émission et de réception*

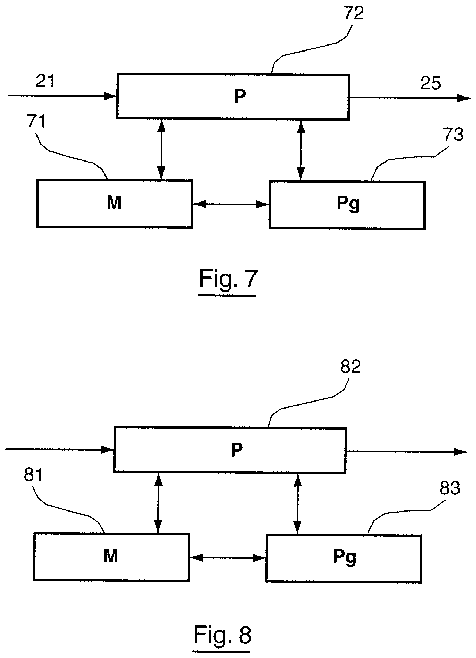

On présente finalement, en relation avec les figures 7 et 8, la structure simplifiée d'un dispositif d'émission et d'un dispositif de réception mettant respectivement en oeuvre l'émission et la réception de données à valeurs complexes selon le mode de réalisation particulier décrit ci-dessus.

Un tel dispositif d'émission comprend une mémoire 71 constituée d'une mémoire tampon, une unité de traitement 72, équipée par exemple d'un microprocesseur $\mu$P, et pilotée par le programme d'ordinateur 73, mettant en oeuvre le procédé d'émission selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un signal de données source à émettre 21. Le microprocesseur de l'unité de traitement 72 met en oeuvre les étapes du procédé d'émission décrit précédemment, selon les instructions du programme d'ordinateur 73, pour générer un signal à porteuses multiples et à étalement de spectre 25. Pour cela, le dispositif d'émission comprend, outre la mémoire tampon 71, des moyens d'étalement d'au moins un symbole de données à valeur complexe, représentatif du signal de données source à émettre, sur un ensemble de sous-porteuses d'au moins un symbole multiporteuse, chacune desdites sous-porteuses modulant une valeur complexe. Ces moyens sont pilotés par le microprocesseur de l'unité de traitement 72.

Un dispositif de réception correspondant comprend une mémoire 81 constituée d'une mémoire tampon, une unité de traitement 82, équipée par exemple d'un microprocesseur $\mu$P, et pilotée par le programme d'ordinateur 83, mettant en oeuvre le procédé de réception selon l'invention.

A l'initialisation, les instructions de code du programme d'ordinateur 83 sont par exemple chargées dans une mémoire RAM avant d'être exécutées par le processeur de l'unité de traitement 82. L'unité de traitement 82 reçoit en entrée un signal à porteuses multiples et à étalement de spectre, formé d'une succession temporelle de symboles mutliporteuses. Le microprocesseur de l'unité de traitement 82 met en oeuvre les étapes du procédé de réception décrit précédemment, selon les instructions du programme d'ordinateur 83, pour estimer au moins un symbole de données à valeur complexe, représentatif d'un signal de données source.

Pour cela, le dispositif de réception comprend, outre la mémoire tampon 81, des moyens de désétalement des symboles multiporteuses, correspondant à une opération inverse audit étalement, délivrant au moins un symbole de données estimé à valeur complexe, représentatif d'un signal de données source. Ces moyens sont pilotés par le microprocesseur de l'unité de traitement 82.

**ANNEXE A**

**Démonstration de l'identité $E = I$ pour $U = 1$**

On rappelle tout d'abord la notation utilisée pour la modulation OQAM définie par l'équation (1), en considérant un terme de phase $\phi_{m,n} = \dfrac{\pi}{2}\big(m + n + 2mn\big)$.

Dans la suite, on réécrit les fonctions de base de l'équation (1) sous la forme :

$$g_{m,n}(t) \;=\; g(t - n\tau_0)e^{j2\pi F_0 t}\nu_{m,n} \qquad (13)$$

avec $\nu_{m,n} = \exp\left( j\dfrac{\pi}{2}\big(m + n + 2mn\big) \right)$ et $F_0 = \nu_0$.

Dans ce cas, la composante d'interférence imaginaire qui apparaît dans l'équation (6) peut s'écrire :

$$\begin{aligned}
\gamma_{m,n}^{(p,n_0)} &= \Im\{\langle g_{m,n}(t), g_{p,n_0}(t)\rangle_c\} \\
&= \Im\{\int_{-\infty}^{\infty} g(t-n\tau_0)g(t-n_0\tau_0)\exp(2j\pi F_0 mt)\exp(-2j\pi F_0 pt)\nu_{m,n}\nu_{p,n_0}^* dt\} \\
&= \Im\{\int_{-\infty}^{\infty} g(u-(n-n_0)\tau_0)g(u)\exp(2j\pi F_0 u(m-p))(-1)^{mn_0}(-1)^{-pn_0}\nu_{m,n}\nu_{p,n_0}^* du\} \\
&= \Im\{A_g(n-n_0, m-p)(-1)^{mn_0}(-1)^{-pn_0}\nu_{m,n}\nu_{p,n_0}^*\}
\end{aligned}$$
$$(14)$$

avec $A_g$ une fonction de type fonction d'ambiguïté, telle que :

$$A_g(n,m) = \int_{-\infty}^{\infty} g(u-n\tau_0)g(u)\exp(2j\pi F_0 um)du \qquad (15)$$

D'autre part, comme $\nu_{m,n}\nu_{p,n_0}^* = (j)^{m+n-p-n_0}(-1)^{mn-pn_0}$, l'équation (14) devient :

$$\begin{aligned}
\gamma_{m,n}^{(p,n_0)} &= \Im(A_g(n-n_0, m-p)(j)^{m+n-p-n_0}(-1)^{mn+mn_0}) \\
&= \Im(A_g(n-n_0, m-p)(j)^{m+n-p-n_0}(-1)^{m(n+n_0)})
\end{aligned}$$

Comme indiqué dans l'équation (11), l'expression du signal reçu après désétalement par un utilisateur $u_0$ est telle que :

$$z_{n_0,u_0}^{(c)} = d_{n_0,u_0}^{(c)} + j\left(\sum_{u=0}^{U-1}\sum_{\substack{n=-2b+1\\n\neq 0}}^{2b-1} d_{n+n_0,u_0}^{(c)}\left(\sum_{p=0}^{2N-1}\sum_{m=0}^{2N-1} c_{p,u_0}c_{m,u}\gamma_{m,n+n_0}^{(p,n_0)}\right)\right)$$

Dans le cas où $U = 1$, on obtient :

$$\begin{aligned}
z_{n_0,u_0}^{(c)} &= d_{n_0,u_0}^{(c)} + j\left(\sum_{\substack{n=-2b+1\\n\neq 0}}^{2b-1} d_{n+n_0,u_0}^{(c)}\left(\sum_{p=0}^{2N-1}\sum_{m=0}^{2N-1} c_{p,u_0}c_{m,u}\gamma_{m,n+n_0}^{(p,n_0)}\right)\right) \\
&= d_{n_0,u_0}^{(c)} + j\left(\sum_{\substack{n=-2b+1\\n\neq 0}}^{2b-1} d_{n+n_0,u_0}^{(c)}\left(\sum_{p=0}^{2N-1}\sum_{m=0}^{2N-1}\right.\right. \\
&\quad c_{p,u_0}c_{m,u_0}\Im(A_g(n, m-p)(j)^{m+n-p}(-1)^{m(n+n_0+n_0)}))) \\
&= d_{n_0,u_0}^{(c)} + j\left(\sum_{\substack{n=-2b+1\\n\neq 0}}^{2b-1} d_{n+n_0,u_0}^{(c)}\left(\sum_{p=0}^{2N-1}\sum_{m=0}^{p-1} c_{p,u_0}c_{m,u_0}(\Im(A_g(n, m-p)(j)^{m+n-p}(-1)^{mn}\right.\right. \\
&\quad + \Im(A_g(n, p-m)(j)^{p+n-m}(-1)^{pn})) \\
&\quad + \sum_{p=0}^{2N-1} c_{p,u_0}c_{p,u_0}(\Im(A_g(n, 0)(j)^n(-1)^{pn}))
\end{aligned}$$
$$(17)$$

On peut montrer que le dernier terme de l'équation (17) est toujours nul. D'après la définition rappelée en équation (11), les codes d'étalement sont tels que $c_{p,u_0} c_{p,u_0} = \dfrac{1}{2N}$. Comme la fonction prototype g est supposée réelle, on peut déduire de l'équation (16) que le terme $A_g(n,0)$ est également réel. Donc le dernier terme de l'équation (17), noté $S_1$, peut s'écrire :

$$S_1 = \frac{1}{2N} \sum_{p=0}^{2N-1} A_g(n,0)(-1)^{pn}\Im\{j^n\} \qquad (18)$$

Comme dans le cas où $n$ est pair on a $\Im\{j^n\} = 0$, et dans le cas où $n$ est impair on a $\displaystyle\sum_{p=0}^{2N-1}(-1)^{pn} = 0$, il en résulte que quelque soit $n$, $S_1 = 0$.

On analyse ensuite le deuxième terme de l'équation (17), noté $S_2$.

$$S_2 = \sum_{p=0}^{2N-1} \sum_{m=0}^{p-1} c_{p,u_0} c_{m,u_0}[\Im\{A_g(n,m-p)(j)^{m+n-p}(-1)^{mn}\} + \Im\{A_g(n,p-m)(j)^{p+n-m}(-1)^{pn}\}]$$

De nouveau, la fonction prototype g étant supposée réelle, nous avons $A_g(n,m) = A_g^*(n,-m)$, si bien que les deux parties imaginaires de $S_2$ peuvent se réécrire comme suit :

$$\begin{aligned}
&\Im\{A_g(n,m-p)(j)^{m+n-p}(-1)^{mn}\} + \Im\{A_g(n,p-m)(j)^{p+n-m}(-1)^{pn}\} \\
&= \Im\{A_g(n,m-p)(j)^{m+n-p}(-1)^{mn} + A_g^*(n,m-p)(j)^{p+n-m}(-1)^{pn}\} \qquad (19)
\end{aligned}$$

Pour $n$ pair, la partie imaginaire à extraire de l'équation (19) est celle d'une somme de deux nombres conjugués, et elle est donc forcément nulle.

Pour $n$ impair, elle se réécrit comme suit :

$$\begin{aligned}
&\Im\{A_g(n,m-p)(j)^{m+n-p}(-1)^{mn} + A_g^*(n,m-p)(j)^{p+n-m}(-1)^{pn}\} \\
&= (j)^n \Re\{A_g(n,m-p)(j)^{m-p}(-1)^{mn} + A_g^*(n,m-p)(j)^{p-m}(-1)^{pn}\}
\end{aligned}$$

On peut alors distinguer deux cas :

- $p$ et $m$ sont de parité différente alors :

$$\Re(A_g(n,m-p)(j)^{m-p}(-1)^{mn} + A_g^*(n,m-p)(j)^{p-m}(-1)^{pn}) = 0$$

- $p$ et $m$ sont de même parité alors :

$$\begin{aligned}
&\Re\{A_g(n,m-p)(j)^{m-p}(-1)^{mn} + A_g^*(n,m-p)(j)^{p-m}(-1)^{pn}\} \\
&= 2\Re\{A_g(n,m-p)(j)^{m-p}(-1)^{mn}\}
\end{aligned}$$

Le contenu de l'équation (17) s'obtient donc en considérant le cas où $n$ est impair, et $p$ et $m$ sont de même parité :

$$z_{n_0,u_0}^{(c)} = d_{n_0,u_0}^{(c)} + 2j\left(\sum_{n=-b}^{b-1} d_{n_0+n,u_0}^{(c)}\left(\sum_{p=0}^{N-1}\sum_{m=0}^{p-1}\right.\right.$$

$$c_{2p,u_0}c_{2m,u_0}(j)^{2n+1}\Re(A_g(2n+1,2m-2p)(j)^{2m-2p}(-1)^{2m(2n+1)}$$

$$+ \sum_{p=0}^{N-1}\sum_{m=0}^{p-1} c_{2p+1,u_0}c_{2m+1,u_0}(j)^{2n+1}\Re(A_g(2n+1,2m-2p)(j)^{2m-2p}(-1)^{(2m+1)(2n+1)})))$$

$$= d_{n_0,u_0}^{(c)} + 2j\left(\sum_{n=-b}^{b-1} d_{n_0+n,u_0}^{(c)}(j)^{2n+1}\left(\sum_{v=0}^{v=N}\Re(A_g(2n+1,n)\left(\sum_{k=0}^{k=2N-1-2v} c_{k+2v,u_0}c_{k,u_0}(-1)^k\right)\right)\right)$$

$$(20)$$

Du fait d'une propriété des matrices de Walsh-Hadamard selon laquelle :

$$\sum_{m=0}^{k} c_{k+2v,u_0}c_{k,u_0}(-1)^k = 0, \quad \text{pour } v = 0,\cdots,N; k = 0,\cdots,2N-1-2v, \qquad (21)$$

la relation (20) devient :

$$z_{n_0,u_0}^{(c)} = d_{n_0,u_0}^{(c)}$$

Ceci montre donc qu'avec un système de type OQAM-CDMA à diversité fréquentielle maximale, c'est-à-dire $a_{m,n} = c_m d_m$, et dans le cas d'un seul utilisateur, il est possible de réaliser une transmission de données $d_m$ à valeurs complexes sans introduire de complexité supplémentaire.

**ANNEXE B**

**Démonstration de l'identité E = *I* pour** $U \leq \dfrac{M}{2}$

Si l'on considère une matrice de Walsh-Hadamard de taille $M = 2^n$, il existe deux sous-ensembles d'indices, notés $S_1^n$ et $S_2^n$, de cardinal égal à $M/2$ et qui forment une partition de l'ensemble des indices.

On démontre tout d'abord que pour $U = 2$, avec deux codes associés respectivement à l'utilisateur $u_0$ et à l'utilisateur $u_1$, tels que $u_0, u_1 \in S_1^n$, ou $u_0, u_1 \in S_2^n$, on a :

$$z_{n,u_0}^{(c)} = d_{n,u_0}^{(c)} \text{ et } z_{n,u_1}^{(c)} = d_{n,u_1}^{(c)}.$$

Pour tout $n_0$, on sait que, selon l'équation (11) :

$$z_{n_0,u_0}^{(c)} = d_{n_0,u_0}^{(c)} + j\left(\sum_{u=0}^{U-1}\sum_{\substack{n=-2b+1\\n\neq 0}}^{2b-1} d_{n+n_0,u}^{(c)}\left(\sum_{p=0}^{2N-1}\sum_{m=0}^{2N-1} c_{p,u_0}c_{m,u}\gamma_{m,n+n_0}^{(p,n_0)}\right)\right)$$

Dans le cas où U = 2, on a :

$$z_{n_0,u_0}^{(c)} = d_{n_0,u_0}^{(c)} + j\left(\sum_{\substack{n=-2b+1 \\ n\neq 0}}^{2b-1} d_{n+n_0,u_0}^{(c)}\left(\sum_{p=0}^{2N-1}\sum_{m=0}^{2N-1} c_{p,u_0}c_{m,u_0}\gamma_{m,n+n_0}^{(p,n_0)}\right)\right)$$

$$+ \ j\left(\sum_{\substack{n=-2b+1 \\ n\neq 0}}^{2b-1} d_{n+n_0,u_1}^{(c)}\left(\sum_{p=0}^{2N-1}\sum_{m=0}^{2N-1} c_{p,u_0}c_{m,u_1}\gamma_{m,n+n_0}^{(p,n_0)}\right)\right)$$

$$(22)$$

Comme montré en annexe A, on a :

$$j\left(\sum_{\substack{n=-2b+1 \\ n\neq 0}}^{2b-1} d_{n+n_0,u_0}^{(c)}\left(\sum_{p=0}^{2N-1}\sum_{m=0}^{2N-1} c_{p,u_0}c_{m,u_0}\gamma_{m,n+n_0}^{(p,n_0)}\right)\right) \ = \ 0$$

$$(23)$$

Par conséquent :

$$z_{n_0,u_0}^{(c)} = d_{n_0,u_0}^{(c)} + j\left(\sum_{\substack{n=-2b+1 \\ n\neq 0}}^{2b-1} d_{n+n_0,u_1}^{(c)}\left(\sum_{p=0}^{2N-1}\sum_{m=0}^{2N-1} c_{p,u_0}c_{m,u_1}\gamma_{m,n+n_0}^{(p,n_0)}\right)\right)$$

$$= d_{n_0,u_0}^{(c)} + j\left(\sum_{\substack{n=-2b+1 \\ n\neq 0}}^{2b-1} d_{n+n_0,u_1}^{(c)}\left(\sum_{p=0}^{2N-1}\sum_{m=0}^{2N-1} c_{p,u_0}c_{m,u_1}\gamma_{m,n+n_0}^{(p,n_0)}\right)\right)$$

$$= d_{n_0,u_0}^{(c)} + j\left(\sum_{\substack{n=-2b+1 \\ n\neq 0}}^{2b-1} d_{n+n_0,u_1}^{(c)}\left(\sum_{p=0}^{2N-1}\sum_{m=0}^{2N-1}\right.\right.$$

$$c_{p,u_0}c_{m,u_1}\Im(A_g(n,m-p)(j)^{m+n+n_0+n_0-p-n_0}(-1)^{m(n+n_0+n_0)})))$$

$$= d_{n_0,u_0}^{(c)} + j\left(\sum_{\substack{n=-2b+1 \\ n\neq 0}}^{2b-1} d_{n+n_0,u_1}^{(c)}\left(\sum_{p=0}^{2N-1}\sum_{m=0}^{p-1}(c_{p,u_0}c_{m,u_1}\Im(A_g(n,m-p)(j)^{m+n-p}(-1)^{mn}\right.\right.$$

$$+ \ c_{p,u_1}c_{m,u_0}\Im(A_g(n,p-m)(j)^{p+n-m}(-1)^{pn}))$$

$$+ \ \sum_{p=0}^{2N-1} c_{p,u_0}c_{p,u_1}(\Im(A_g(n,0)(j)^n(-1)^{pn}))$$

$$(24)$$

Or selon une deuxième propriété des matrices de Walsh Hadamard, pour $u_0,u_1 \in S_1^n$, on a :

$$\sum_{p=0}^{2N-1} c_{p,u_0}c_{p,u_1}(\Im(A_g(n,0)(j)^n(-1)^{pn})) = 0$$

d'où :

...

$$z_{n_0,u_0}^{(c)} = d_{n_0,u_0}^{(c)} + j\Big(\sum_{\substack{n=-2b+1 \\ n\neq 0}}^{2b-1} d_{n+n_0,u_1}^{(c)} \Big(\sum_{p=0}^{2N-1}\sum_{m=0}^{p-1}(c_{p,u_0}c_{m,u_1}\Im(A_g(n,m-p)(j)^{m+n-p}(-1)^{mn}$$

$$+ \quad c_{p,u_1}c_{m,u_0}\Im(A_g(n,p-m)(j)^{p+n-m}(-1)^{pn}))$$

$$(25)$$

De plus, selon une troisième propriété des matrices de Walsh Hadamard, pour tout $n$ et pour $u_0, u_1 \in S_1^n$, on a :

$$\Big(\sum_{p=0}^{2N-1}\sum_{m=0}^{p-1}(c_{p,u_0}c_{m,u_1}\Im(A_g(n,m-p)(j)^{m+n-p}(-1)^{mn} + c_{p,u_1}c_{m,u_0}\Im(A_g(n,p-m)(j)^{p+n-m}(-1)^{pn})) = 0$$

$$(26)$$

Par conséquent, $z_{n,u_0}^{(c)} = d_{n,u_0}^{(c)}$ et $z_{n,u_1}^{(c)} = d_{n,u_1}^{(c)}$.

Ce résultat étant démontré, on peut voir qu'il s'étend aisément jusqu'à $U \leq \dfrac{M}{2}$ avec des indices pour les U utilisateurs choisis soit dans le sous-2 ensemble $S_1^n$, soit dans le sous-ensemble $S_2^n$.

Autrement dit, la matrice d'interférence $E$ est égale à l'identité. La construction des sous-ensembles $S_1^n$ et $S_2^n$ se fait par récurrence, comme décrit précédemment.

## Revendications

1. Procédé d'émission d'un signal à porteuses multiples et à étalement de spectre formé d'une succession temporelle de symboles multiporteuses, mettant en oeuvre une modulation de type Orthogonal Quadrature Amplitude Modulation, OQAM, et une pluralité de codes d'étalement orthogonaux entre eux,
**caractérisé en ce qu'**il comprend :

une étape d'obtention d'au moins un sous-ensemble de K codes d'étalement, parmi un ensemble de N codes d'étalement disponibles, avec K strictement inférieur à N ;
une étape d'étalement d'au moins un symbole de données à valeur complexe, représentatif d'un signal de données source à émettre, sur un ensemble de sous-porteuses d'au moins un symbole multiporteuse desdits symboles multiporteuses, mettant en oeuvre une multiplication dudit au moins un symbole de données à valeur complexe par un code d'étalement issu dudit sous-ensemble,
chacune desdites sous-porteuses modulant une valeur complexe.

2. Procédé d'émission selon la revendication 1, **caractérisé en ce qu'**il est mis en oeuvre dans un réseau de communication, et **en ce que** ledit sous-ensemble est déterminé en tenant compte d'un nombre de flux de transmission dans ledit réseau.

3. Procédé d'émission selon l'une quelconque des revendications 1 et 2, **caractérisé en ce que** ledit ensemble de codes d'étalement disponibles est défini par les colonnes d'une matrice d'étalement de taille $M = 2^{n_0}$, avec $n_0$ un entier positif, et **en ce que** ladite étape d'obtention délivre deux sous-ensembles de codes d'étalement, comprenant chacun $M/2$ codes.

4. Procédé d'émission selon la revendication 3, **caractérisé en ce que** ladite matrice d'étalement est une matrice de type Walsh-Hadamard, et **en ce que** lesdits deux sous-ensembles sont déterminés de manière récursive.

5.

Procédé d'émission selon la revendication 4, **caractérisé en ce que** lesdits deux sous-ensembles $S_1^{n_0}$ et $S_2^{n_0}$ sont déterminés de la manière suivante :

- pour une matrice d'étalement de taille $M = 2^1$, le premier sous-ensemble $S_1^1$ comprend le code d'étalement correspondant à la première colonne de ladite matrice d'étalement, et le deuxième sous-ensemble $S_2^1$ comprend le code d'étalement correspondant à la deuxième colonne de ladite matrice d'étalement ;

- pour une matrice d'étalement de taille $M = 2^{n_0+1}$, le premier sous-ensemble $S_1^{n_0+1}$ comprend les codes d'étalement correspondant aux colonnes de ladite matrice d'étalement définies par les indices $j$ tels que

$$j = \left\{ S_1^{n_0} \bigcup \overline{S}_1^{n_0} \right\},$$ et le deuxième sous-ensemble $S_2^{n_0+1}$ comprend les codes d'étalement correspondant aux colonnes de ladite matrice d'étalement définies par les indices $j$ tels que $j = \left\{ S_2^{n_0} \bigcup \overline{S}_2^{n_0} \right\}$, pour $1 \leq j$

$\leq 2^{n_0+1}$

où, en notant $i_{1,\alpha}$ pour $1 \leq \alpha \leq 2^{n_0-1}$, les indices des codes du sous-ensemble $S_1^{n_0}$, et $i_{2,\beta}$ pour $1 \leq \beta \leq 2^{n_0-1}$, les

indices des codes du sous-ensemble $S_2^{n_0}$, tels que $S_1^{n_0} = \left\{ i_{1,1}, i_{1,2}, i_{1,3}, \ldots, i_{1,2^{n_0}-1} \right\}$ et

$$S_2^{n_0} = \left\{ i_{2,1}, i_{2,2}, i_{2,3}, \ldots, i_{2,2^{n_0}-1} \right\},$$ on a:

$$- \overline{S}_1^{n_0} = \left\{ i_{2,1} + 2^{n_0}, i_{2,2} + 2^{n_0}, i_{2,3} + 2^{n_0}, \ldots, i_{2,2^{n_0}-1} + 2^{n_0} \right\}$$

$$- \overline{S}_2^{n_0} = \left\{ i_{1,1} + 2^{n_0}, i_{1,2} + 2^{n_0}, i_{1,3} + 2^{n_0}, \ldots, i_{1,2^{n_0}-1} + 2^{n_0} \right\}.$$

6. Procédé d'émission selon l'une quelconque des revendications 1 à 5, **caractérisé en ce que** ladite étape d'étalement utilise tous les codes d'étalement d'un desdits sous-ensembles, plus au moins un code d'étalement d'un autre sous-ensemble.

7. Procédé d'émission selon l'une quelconque des revendications 1 à 6, **caractérisé en ce que** ledit signal à porteuses multiples et à étalement de spectre est de type Biorthogonal Frequency Division Multiplexing / Offset Quadrature Amplitude Modulation, BFDM/OQAM, ou bien de type Orthogonal Frequency Division Multiplexing / Offset Quadrature Amplitude Modulation, OFDM/OQAM.

8. Procédé d'émission selon l'une quelconque des revendications 1 à 7, **caractérisé en ce qu'**il comprend une étape de codage spatio-temporel de type Alamouti, et **en ce qu'**il est mis en oeuvre dans un système multi-antennes comprenant au moins deux antennes d'émission et au moins une antenne de réception.

9. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé d'émission selon l'une au moins des revendications 1 à 8.

10. Dispositif d'émission d'un signal à porteuses multiples et à étalement de spectre formé d'une succession temporelle de symboles multiporteuses, mettant en oeuvre une modulation de type Offset Quadrature Amplitude Modulation, OQAM, et une pluralité de codes d'étalement orthogonaux entre eux, **caractérisé en ce qu'**il comprend :

des moyens d'obtention d'au moins un sous-ensemble de K codes d'étalement, parmi un ensemble de N codes d'étalement disponibles, avec K strictement inférieur à N ;
des moyens d'étalement d'au moins un symbole de données à valeur complexe, représentatif d'un signal de données source à émettre, sur un ensemble de sous-porteuses d'au moins un symbole multiporteuse, mettant en oeuvre une multiplication dudit au moins un symbole de données à valeur complexe par un code d'étalement issu dudit sous-ensemble,
chacune desdites sous-porteuses modulant une valeur complexe.

**11.** Signal à porteuses multiples et à étalement de spectre formé d'une succession temporelle de symboles multiporteuses, obtenu par une modulation de type Offset Quadrature Amplitude Modulation, OQAM, et une pluralité de codes d'étalement orthogonaux entre eux,
**caractérisé en ce qu'**au moins un symbole de données à valeur complexe, représentatif d'un signal de données source à émettre, est étalé sur un ensemble de sous-porteuses d'au moins un desdits symboles multiporteuses, par multiplication dudit au moins un symbole de données à valeur complexe par un code d'étalement issu d'un sous-ensemble de K codes d'étalement, obtenu parmi un ensemble de N codes d'étalement disponibles, avec K strictement inférieur à N,
chacune desdites sous-porteuses modulant une valeur complexe.

**12.** Procédé de réception d'un signal à porteuses multiples et à étalement de spectre formé d'une succession temporelle de symboles multiporteuses, mettant en oeuvre une modulation de type Offset Quadrature Amplitude Modulation, OQAM, et une pluralité de codes d'étalement orthogonaux entre eux,
**caractérisé en ce que**,
ledit signal à porteuses multiples et à étalement de spectre ayant subi, à l'émission, une étape d'étalement d'au moins un symbole de données à valeur complexe, représentatif d'un signal de données source à émettre, sur un ensemble de sous-porteuses d'au moins un symbole multiporteuse desdits symboles multiporteuses, par multiplication dudit au moins un symbole de données à valeur complexe par un code d'étalement issu d'un sous-ensemble de K codes d'étalement, obtenu parmi un ensemble de N codes d'étalement disponibles, avec K strictement inférieur à N, chacune desdites sous-porteuses modulant une valeur complexe,
ledit procédé de réception comprend une étape de désétalement desdits symboles multiporteuses, correspondant à une opération inverse de ladite étape d'étalement, délivrant au moins un symbole de données estimé à valeur complexe, représentatif d'un signal de données source.

**13.** Procédé de réception selon la revendication 12, **caractérisé en ce qu'**il comprend une première étape d'égalisation, précédent ladite étape de désétalement, et une deuxième étape d'égalisation, suivant ladite étape de désétalement, ladite deuxième étape d'égalisation réduisant un terme d'interférence entre symboles affectant lesdits symboles de données estimés.

**14.** Procédé de réception selon l'une quelconque des revendications 12 et 13, **caractérisé en ce qu'**il comprend une étape de décodage spatio-temporel de type Alamouti, et **en ce qu'**il est mis en oeuvre dans un système multi-antennes comprenant au moins deux antennes d'émission et au moins une antenne de réception.

**15.** Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de réception selon l'une au moins des revendications 12 à 14.

**16.** Dispositif de réception d'un signal à porteuses multiples et à étalement de spectre formé d'une succession temporelle de symboles multiporteuses, mettant en oeuvre une modulation de type Offset Quadrature Amplitude Modulation, OQAM, et une pluralité de codes d'étalement orthogonaux entre eux,
**caractérisé en ce que**,
ledit signal à porteuses multiples et à étalement de spectre ayant subi, à l'émission, un étalement d'au moins un symbole de données à valeur complexe, représentatif d'un signal de données source à émettre, sur un ensemble de sous-porteuses d'au moins un symbole multiporteuse desdits symboles mulitporteuses, par multiplication dudit au moins un symbole de données à valeur complexe par un code d'étalement issu d'un sous-ensemble de K codes d'étalement, obtenu parmi un ensemble de N codes d'étalement disponibles, avec K strictement inférieur à N, chacune desdites sous-porteuses modulant une valeur complexe,
ledit dispositif de réception comprend des moyens de désétalement desdits symboles multiporteuses, correspondant à une opération inverse audit étalement, délivrant au moins un symbole de données estimé à valeur complexe, représentatif d'un signal de données source.

**Patentansprüche**

1. Verfahren zum Aussenden eines Signals mit mehreren Trägern und mit Spektralerweiterung, das aus einer zeitlichen Folge von Mehrfachträgersymbolen gebildet ist, die eine Modulation des Typs mit Orthogonal-Quadratur-Amplitudenmodulation, OQAM-Typ, und mehrere zueinander orthogonale Erweiterungscodes verwendet, **dadurch gekennzeichnet, dass** es Folgendes umfasst:

   einen Schritt des Erhaltens wenigstens einer Untergesamtheit von K Erweiterungscodes aus einer Gesamtheit von N verfügbaren Erweiterungscodes, wobei K streng kleiner als N ist;
   einen Schritt des Erweiterns wenigstens eines Symbols von Daten mit komplexem Wert, das ein auszusendendes Quelldatensignal darstellt, auf einer Gesamtheit von Unterträgern wenigstens eines Mehrfachträgersymbols der Mehrfachträgersymbole, der eine Multiplikation des wenigstens einen Datensymbols mit komplexem Wert mit einem von der Untergesamtheit ausgegebenen Erweiterungscode verwendet,
   wobei jeder der Unterträger einen komplexen Wert moduliert.

2. Sendeverfahren nach Anspruch 1, **dadurch gekennzeichnet, dass** es in einem Kommunikationsnetz ausgeführt wird und dass die Untergesamtheit unter Berücksichtigung einer Übertragungsflusszahl in dem Netz bestimmt wird.

3. Sendeverfahren nach einem der Ansprüche 1 und 2, **dadurch gekennzeichnet, dass** die Gesamtheit verfügbarer Erweiterungscodes durch die Spalten einer Erweiterungsmatrix mit Größe $M = 2^{n0}$ definiert ist, wobei $n_0$ eine positive ganze Zahl ist, und dass der Schritt des Erhaltens zwei Untergesamtheiten von Erweiterungscodes liefert, die jeweils M/2 Codes enthalten.

4. Sendeverfahren nach Anspruch 3, **dadurch gekennzeichnet, dass** die Erweiterungsmatrix eine Matrix des Walsh-Hadamard-Typs ist und dass die zwei Untergesamtheiten rekursiv bestimmt werden.

5. Sendeverfahren nach Anspruch 4, **dadurch gekennzeichnet, dass** die zwei Untergesamtheiten $S_1^{n0}$ und $S_2^{n0}$ folgendermaßen bestimmt werden:

   - für eine Erweiterungsmatrix mit Größe $M = 2^1$ enthält die erste Untergesamtheit $S_1^1$ den Erweiterungscode, der der ersten Spalte der Erweiterungsmatrix entspricht, und enthält die zweite Untergesamtheit $S_2^1$ den Erweiterungscode, der der zweiten Spalte der Erweiterungsmatrix entspricht;
   - für eine Erweiterungsmatrix mit Größe $M = 2^{n0+1}$ enthält die erste Untergesamtheit $S_0^{n0+1}$ die Erweiterungscodes, die den Spalten der Erweiterungsmatrix entsprechen, die durch die Indizes wie etwa

$$j = \left\{ S_1^{n_0} \bigcup \overline{S}_1^{n_0} \right\}$$ definiert sind, und enthält die zweite Untergesamtheit $S_2^{n0+1}$ die Erweiterungscodes, die

   den Spalten der Erweiterungsmatrix entsprechen, die durch die Indizes j wie etwa $j = \left\{ S_2^{n_0} \bigcup \overline{S}_2^{n_0} \right\}$ definiert

   sind, für $1 \leq j \leq 2^{n0+1}$,

wobei dann, wenn für die Indizes der Codes der Untergesamtheit $S_1^{n0}$ $i_{1,\alpha}$ für $1 \leq \alpha \leq 2^{n0-1}$ geschrieben wird, und für die Indizes der Codes der Untergesamtheit $S_2^{n0}$ $i_{2,\beta}$ für $1 \leq \beta \leq 2^{n0-1}$ geschrieben wird, derart, dass

$$S_1^{n_0} = \left\{ i_{1,1}, i_{1,2}, i_{1,3}, \ldots, i_{1,2^{n_0-1}} \right\}$$

und

$$S_2^{n_0} = \left\{ i_{2,1}, i_{2,2}, i_{2,3}, \ldots, i_{2,2^{n_0-1}} \right\},$$

Folgendes gilt:

$$- \overline{S}_1^{n_0} = \left\{ i_{2,1} + 2^{n_0}, i_{2,2} + 2^{n_0}, i_{2,3} + 2^{n_0}, \ldots, i_{2,2^{n_0}-1} + 2^{n_0} \right\}$$

$$- \overline{S}_2^{n_0} = \left\{ i_{1,1} + 2^{n_0}, i_{1,2} + 2^{n_0}, i_{1,3} + 2^{n_0}, \ldots, i_{1,2^{n_0}-1} + 2^{n_0} \right\}.$$

6. Sendeverfahren nach einem der Ansprüche 1 bis 5, **dadurch gekennzeichnet, dass** der Erweiterungsschritt sämtliche Erweiterungscodes einer der Untergesamtheiten zuzüglich wenigstens eines Erweiterungscodes einer anderen Untergesamtheit verwendet.

7. Sendeverfahren nach einem der Ansprüche 1 bis 6, **dadurch gekennzeichnet, dass** das Signal mit mehreren Trägern und mit Spektralerweiterung vom Typ biorthogonales Frequenzmultiplexieren/Versatz-Quadratur-Amplitudenmodulation, BFDM/OQAM, oder aber vom Typ orthogonales Frequenzmultiplexieren/Versatz-Quadratur-Amplitudenmodulation, OFDM/OQAM, ist.

8. Sendeverfahren nach einem der Ansprüche 1 bis 7, **dadurch gekennzeichnet, dass** es einen Schritt des raumzeitlichen Codierens des Alamouti-Typs umfasst und dass es in einem Mehrfachantennensystem ausgeführt wird, das wenigstens zwei Sendeantennen und wenigstens eine Empfangsantenne umfasst.

9. Computerprogrammprodukt, das von einem Kommunikationsnetz ferngeladen werden kann und/oder auf einem durch einen Computer lesbaren Träger aufgezeichnet ist und/oder durch einen Prozessor abgearbeitet werden kann, **dadurch gekennzeichnet, dass** es Programmcodebefehle für die Ausführung des Sendeverfahrens nach wenigstens einem der Ansprüche 1 bis 8 enthält.

10. Vorrichtung zum Aussenden eines Signals mit mehreren Trägern und mit Spektralerweiterung, das durch eine zeitliche Folge von Mehrfachträgersymbolen gebildet ist, die eine Modulation des Typs Versatz-Quadratur-Amplitudenmodulation, OQAM, und mehrere zueinander orthogonale Erweiterungscodes verwendet,
**dadurch gekennzeichnet, dass** es Folgendes umfasst:

Mittel zum Erhalten wenigstens einer Untergesamtheit von K Erweiterungscodes aus einer Gesamtheit von N verfügbaren Erweiterungscodes, wobei K streng kleiner als N ist;
Mittel zum Erweitern wenigstens eines Datensymbols mit komplexem Wert, das ein auszusendendes Quelldatensignal darstellt, auf einer Gesamtheit von Unterträgern wenigstens eines Mehrfachträgersymbols, die eine Multiplikation des wenigstens einen Datensymbols mit komplexem Wert mit einem von der Untergesamtheit gelieferten Erweiterungscode verwenden,
wobei jeder der Unterträger einen komplexen Wert moduliert.

11. Signal mit mehreren Trägern und mit Spektralerweiterung, das durch eine zeitliche Folge von Mehrfachträgersignalen gebildet ist, die durch eine Modulation des Typs Versatz-Quadratur-Amplitudenmodulation, OQAM, und durch mehrere zueinander orthogonale Erweiterungscodes erhalten wird,
**dadurch gekennzeichnet, dass** wenigstens ein Datensymbol mit komplexem Wert, das ein auszusendendes Quelldatensignal darstellt, auf einer Gesamtheit von Unterträgern wenigstens eines der Mehrfachträgersymbole erweitert wird durch Multiplikation des wenigstens einen Datensymbols mit komplexem Wert mit einem Erweiterungscode, der von einer Untergesamtheit von K Erweiterungscodes ausgegeben wird, die aus einer Gesamtheit von N verfügbaren Erweiterungscodes erhalten wird, wobei K streng kleiner als N ist,
wobei jeder der Unterträger einen komplexen Wert moduliert.

12. Verfahren zum Empfangen eines Signals mit mehreren Trägern und mit Spektralerweiterung, das aus einer zeitlichen Folge von Mehrfachträgersymbolen gebildet ist, das eine Modulation des Typs Versatz-Quadratur-Amplitudenmodulation, OQAM, und mehrere zueinander orthogonale Erweiterungscodes verwendet,
**dadurch gekennzeichnet, dass**
auf das Signal mit mehreren Trägern und mit Spektralerweiterung beim Aussenden ein Schritt des Erweiterns wenigstens eines Datensymbols mit komplexem Wert, das ein auszusendendes Quelldatensignal darstellt, auf einer Gesamtheit von Unterträgern wenigstens eines Mehrfachträgersymbols der Mehrfachträgersymbole durch Multiplikation des wenigstens einen Datensymbols mit komplexem Wert mit einem Erweiterungscode, der von einer Untergesamtheit von K Erweiterungscodes ausgegeben wird, die aus einer Gesamtheit von N verfügbaren Erweiterungscodes erhalten wird, wobei K streng kleiner als N ist, angewendet wird, wobei jeder der Unterträger einen komplexen Wert moduliert,

wobei das Empfangsverfahren einen Schritt der Antierweiterung der Mehrfachträgersymbole umfasst, der einer dem Erweiterungsschritt entgegengesetzten Operation entspricht und wenigstens ein geschätztes Datensymbol mit komplexem Wert ausgibt, das ein Quelldatensignal darstellt.

13. Empfangsverfahren nach Anspruch 12, **dadurch gekennzeichnet, dass** es einen ersten Einebnungsschritt, der dem Antierweiterungsschritt vorhergeht, und einen zweiten Erweiterungsschritt, der dem Antierweiterungsschritt folgt, umfasst,

wobei der zweite Einebnungsschritt einen Störungsterm zwischen Symbolen, der die geschätzten Datensymbole beeinflusst, verringert.

14. Empfangsverfahren nach einem der Ansprüche 12 und 13, **dadurch gekennzeichnet, dass** es einen Schritt des raumzeitlichen Decodierens des Alamouti-Typs umfasst und dass es in einem Mehrfachantennensystem ausgeführt wird, das wenigstens zwei Sendeantennen und wenigstens eine Empfangsantenne umfasst.

15. Computerprogrammprodukt, das von einem Kommunikationsnetz ferngeladen werden kann und/oder in einem durch einen Computer lesbaren Träger aufgezeichnet ist und/oder durch einen Prozessor abgearbeitet werden kann, **dadurch gekennzeichnet, dass** es Programmcodebefehle enthält, um das Empfangsverfahren nach wenigstens einem der Ansprüche 12 bis 14 auszuführen.

16. Vorrichtung zum Empfangen eines Signals mit mehreren Trägern und mit Spektralerweiterung, das durch eine zeitliche Folge von Mehrfachträgersymbolen gebildet ist, die eine Modulation des Typs Versatz-Quadratur-Amplitudenmodulation, OQAM, und mehrere zueinander orthogonale Erweiterungscodes verwendet, **dadurch gekennzeichnet, dass**

auf das Signal mit mehreren Trägern und mit Spektralerweiterung beim Aussenden eine Erweiterung wenigstens eines Datensymbols mit komplexem Wert, das ein auszusendendes Quelldatensignal darstellt, auf einer Gesamtheit von Unterträgern wenigstens eines Mehrfachträgersymbols der Mehrfachträgersymbole durch Multiplikation wenigstens eines Datensymbols mit komplexem Wert mit einem Erweiterungscode, der von einer Untergesamtheit von K Erweiterungscodes ausgegeben wird, die aus einer Gesamtheit von N verfügbaren Erweiterungscodes erhalten wird, wobei K streng kleiner als N ist, angewendet wird, wobei jeder der Unterträger einen komplexen Wert moduliert,

wobei die Empfangsvorrichtung Mittel zum Antierweitern der Mehrfachträgersymbole umfasst, die einer der Erweiterung entgegengesetzten Operation entspricht und wenigstens ein geschätztes Datensymbol mit komplexem Wert ausgibt, das ein Quelldatensignal darstellt.

## Claims

1. Method for transmitting a multicarrier spread-spectrum signal formed by a temporal succession of multicarrier symbols, implementing a modulation of Orthogonal Quadrature Amplitude Modulation, OQAM, type, and a plurality of mutually orthogonal spreading codes, **characterized in that** it comprises:

a step of obtaining of at least one subset of K spreading codes, out of a set of N available spreading codes, with K strictly less than N;

a step of spreading of at least one data symbol with complex value, representative of a source data signal to be transmitted, over a set of subcarriers of at least one multicarrier symbol of said multicarrier symbols, implementing a multiplication of said at least one data symbol with complex value by a spreading code derived from said subset,

each of said subcarriers modulating a complex value.

2. Transmission method according to Claim 1, **characterized in that** it is implemented in a communication network, and **in that** said subset is determined by taking account of a number of transmission streams in said network.

3. Transmission method according to either one of Claims 1 and 2, **characterized in that** said set of available spreading codes is defined by the columns of a spreading matrix of size $M = 2^{n_0}$, with $n_0$ a positive integer, and **in that** said obtaining step delivers two subsets of spreading codes, each comprising *M/2* codes.

4. Transmission method according to Claim 3, **characterized in that** said spreading matrix is a matrix of Walsh-Hadamard type, and **in that** said two subsets are determined recursively.

5. Transmission method according to Claim 4, **characterized in that** said two subsets $S_1^{n_0}$ and $S_2^{n_0}$ are determined as follows:

- for a spreading matrix of size M = $2^1$, the first subset $S_1^1$ comprises the spreading code corresponding to the first column of said spreading matrix, and the second subset $S_2^1$ comprises the spreading code corresponding to the second column of said spreading matrix;

- for a spreading matrix of size $M = 2^{n_0+1}$, the first subset $S_1^{n_0+1}$ comprises the spreading codes corresponding to the columns of said spreading matrix defined by the indices *j* such that $j = \left\{ S_1^{n_0} \bigcup \overline{S}_1^{n_0} \right\}$, and the second subset $S_2^{n_0+1}$ comprises the spreading codes corresponding to the columns of said spreading matrix defined by the indices *j* such that

$$j = \left\{ S_2^{n_0} \bigcup \overline{S}_2^{n_0} \right\}, \quad \text{for} \quad 1 \le j \le 2^{n_0+1},$$

in which, by using $i_{1,\alpha}$, for $1 \le \alpha \le 2^{n_0-1}$, to denote the indices of the codes of the subset $S_1^{n_0}$, and $i_{2,\beta}$, for $1 \le \beta \le 2^{n_0-1}$, to denote the indices of the codes of the subset $S_2^{n_0}$, such that

$$S_1^{n_0} = \left\{ i_{1,1}, i_{1,2}, i_{1,3}, \ldots, i_{1,2^{n_0-1}} \right\}$$

and

$$S_2^{n_0} = \left\{ i_{2,1}, i_{2,2}, i_{2,3}, \ldots, i_{2,2^{n_0-1}} \right\},$$

the following applies:

- $\overline{S}_1^{n_0} = \left\{ i_{2,1} + 2^{n_0}, i_{2,2} + 2^{n_0}, i_{2,3} + 2^{n_0}, \ldots, i_{2,2^{n_0-1}} + 2^{n_0} \right\}$

- $\overline{S}_2^{n_0} = \left\{ i_{1,1} + 2^{n_0}, i_{1,2} + 2^{n_0}, i_{1,3} + 2^{n_0}, \ldots, i_{1,2^{n_0-1}} + 2^{n_0} \right\}.$

6. Transmission method according to any one of Claims 1 to 5, **characterized in that** said spreading step uses all the spreading codes of one of said subsets, plus at least one spreading code of another subset.

7. Transmission method according to any one of Claims 1 to 6, **characterized in that** said multicarrier spread-spectrum signal is of Biorthogonal Frequency Division Multiplexing/Offset Quadrature Amplitude Modulation, BFDM/OQAM, type, or else of Orthogonal Frequency Division Multiplexing/Offset Quadrature Amplitude Modulation, OFDM/OQAM, type.

8. Transmission method according to any one of Claims 1 to 7, **characterized in that** it comprises a space-time coding step of Alamouti type, and **in that** it is implemented in a multi-antenna system comprising at least two transmission antennas and at least one reception antenna.

9.  Computer program product that can be downloaded from a communication network and/or stored on a computer-readable medium and/or is executable by a processor, **characterized in that** it comprises program code instructions for implementing the transmission method according to at least one of Claims 1 to 8.

10. Device for transmitting a multicarrier spread-spectrum signal formed by a temporal succession of multicarrier symbols, implementing a modulation of Offset Quadrature Amplitude Modulation, OQAM, type, and a plurality of mutually orthogonal spreading codes,
    **characterized in that** it comprises:

    means for obtaining at least one subset of K spreading codes, out of a set of N available spreading codes, with K strictly less than N;
    means for spreading at least one data symbol with complex value, representative of a source data signal to be transmitted, over a set of subcarriers of at least one multicarrier symbol, implementing a multiplication of said at least one data symbol with complex value by a spreading code derived from said subset,
    each of said subcarriers modulating a complex value.

11. Multicarrier spread-spectrum signal formed by a temporal succession of multicarrier symbols, obtained by a modulation of Offset Quadrature Amplitude Modulation, OQAM, type, and a plurality of mutually orthogonal spreading codes, **characterized in that** at least one data symbol with complex value, representative of a source data signal to be transmitted, is spread over a set of subcarriers of at least one of said multicarrier symbols, by multiplication of said at least one data symbol with complex value by a spreading code derived from a subset of K spreading codes, obtained from a set of N available spreading codes, with K strictly less than N, each of said subcarriers modulating a complex value.

12. Method for receiving a multicarrier spread-spectrum signal formed by a temporal succession of multicarrier symbols, implementing a modulation of Offset Quadrature Amplitude Modulation, OQAM, type, and a plurality of mutually orthogonal spreading codes,
    **characterized in that**,
    said multicarrier spread-spectrum signal having undergone, in transmission, a step of spreading of at least one data symbol with complex value, representative of a source data signal to be transmitted, over a set of subcarriers of at least one multicarrier symbol of said multicarrier symbols, by multiplication of said at least one data symbol with complex value by a spreading code derived from a subset of K spreading codes, obtained from a set of N available spreading codes, with K strictly less than N, each of said subcarriers modulating a complex value,
    said reception method comprises a step of unspreading of said multicarrier symbols, corresponding to a reverse operation of said spreading step, delivering at least one estimated data symbol with complex value, representative of a source data signal.

13. Reception method according to Claim 12, **characterized in that** it comprises a first equalization step, preceding said unspreading step, and a second equalization step, following said unspreading step,
    said second equalization step reducing a term of interference between symbols affecting said estimated data symbols.

14. Reception method according to either one of Claims 12 and 13, **characterized in that** it comprises a step of space-time decoding of Alamouti type, and **in that** it is implemented in a multi-antenna system comprising at least two transmission antennas and at least one reception antenna.

15. Computer program product that can be downloaded from a communication network and/or stored on a computer-readable medium and/or is executable by a processor, **characterized in that** it comprises program code instructions for implementing the reception method according to at least one of Claims 12 to 14.

16. Device for receiving a multicarrier spread-spectrum signal formed by a temporal succession of multicarrier symbols, implementing a modulation of Offset Quadrature Amplitude Modulation, OQAM, type, and a plurality of mutually orthogonal spreading codes,
    **characterized in that**,
    said multicarrier spread-spectrum signal having undergone, in transmission, a spreading of at least one data symbol with complex value, representative of a source data signal to be transmitted, over a set of subcarriers of at least one multicarrier symbol of said multicarrier symbols, by multiplication of said at least one data symbol with complex value by a spreading code derived from a subset of K spreading codes, obtained from a set of N available spreading codes, with K strictly less than N, each of said subcarriers modulating a complex value,

said reception device comprises means for unspreading said multicarrier symbols, corresponding to a reverse operation of said spreading, delivering at least one estimated data symbol with complex value, representative of a source data signal.

Fig. 1

Fig. 2

Fig. 3

Fig. 4

Fig. 5

Fig. 6

Fig. 7

Fig. 8

**EP 2 156 590 B1**

## RÉFÉRENCES CITÉES DANS LA DESCRIPTION

**Documents brevets cités dans la description**

- EP 1511206 A1